(19) Europäisches Patentamt
European Patent Office
Office européen des brevets

(11) **EP 4 746 547 A1**

(12) **EUROPEAN PATENT APPLICATION**
published in accordance with Art. 153(4) EPC

(43) Date of publication:
**20.05.2026 Bulletin 2026/21**

(21) Application number: **23948864.6**

(22) Date of filing: **16.08.2023**

(51) International Patent Classification (IPC):
**H04W 72/04** (2023.01)   **H04L 5/00** (2006.01)

(52) Cooperative Patent Classification (CPC):
**H04L 5/00; H04W 72/04**

(86) International application number:
**PCT/CN2023/113418**

(87) International publication number:
**WO 2025/035435 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **LIU, Lei**
  **Shenzhen, Guangdong 518129 (CN)**
• **BI, Xiaoyan**
  **Shenzhen, Guangdong 518129 (CN)**
• **MA, Jianglei**
  **Shenzhen, Guangdong 518129 (CN)**
• **GE, Yiqun**
  **Shenzhen, Guangdong 518129 (CN)**
• **SHI, Wuxian**
  **Shenzhen, Guangdong 518129 (CN)**

(74) Representative: **Isarpatent**
**Patent- und Rechtsanwälte Part G mbB**
**Friedrichstrasse 31**
**80801 München (DE)**

(54) **COMMUNICATION METHOD AND COMMUNICATION DEVICE**

(57)   This application provides a communication method and a communication apparatus. In the method, a first apparatus may receive first indication information indicative of M orthogonal vectors, where there is a mapping relationship between the M orthogonal vectors and a first resource pattern of a reference signal. The first apparatus may derive the first resource pattern of the reference signal based on the M orthogonal vectors indicated by the first indication information, to flexibly indicate the resource pattern of the reference signal. Additionally, a plurality of candidate orthogonal vectors or a method for generating a plurality of candidate orthogonal vectors may be predefined in this application. In this case, the first indication information indicates the M orthogonal vectors in the plurality of candidate orthogonal vectors. Compared with a direct indication of the resource pattern of the reference signal, the indication of the M orthogonal vectors can significantly reduce indication overheads.

FIG. 3

**Description**

**TECHNICAL FIELD**

This application relates to the field of communication technologies, and in particular, to a communication method and a communication apparatus.

**BACKGROUND**

Currently, to support a multi-antenna (multiple-input multiple-output, MIMO) technology with ultra-high-dimensional receive/transmit antenna ports and ultra-wide bandwidths, a first reference signal (reference signal, RS) resource pattern used for data transmission and channel state information (channel state information, CSI) collection is designed. Based on the design, RS resource overheads can be significantly reduced while achieving good performance. The first RS resource pattern (namely, a first resource pattern of a reference signal) is irregularly scattered across one or more of time domain, frequency domain, and spatial domain. For example, the RS is sent only through some transmit antenna ports, or each RS port occupies some resources in only frequency domain/time domain to send the RS. However, when the first RS resource pattern is irregularly scattered across one or more of time domain, frequency domain, and spatial domain, indication overheads of the RS resource pattern increases dramatically. How to reduce indication overheads of RSs becomes a problem to be resolved.

**SUMMARY**

This application provides a communication method and a communication apparatus. Indication overheads of a reference signal resource pattern can be reduced by using the method.

According to a first aspect, this application provides a communication method. The method is performed by a first apparatus. The first apparatus may be a terminal, or may be a component (for example, a processor, a chip, or a chip system) of the terminal, or may be a logical module that can implement all or a part of functions of the terminal. The first apparatus receives first indication information, where the first indication information indicates M orthogonal vectors, and there is a mapping relationship between the M orthogonal vectors and a first resource pattern of a reference signal. The first apparatus determines the first resource pattern of the reference signal based on the first indication information.

In the method, the first apparatus may receive the first indication information, where the first indication information may indicate the M orthogonal vectors, and there is a mapping relationship between the M orthogonal vectors and the first resource pattern of the reference signal. The first apparatus may derive the first resource pattern of the reference signal based on the M orthogonal vectors indicated by the first indication information. Optionally, the one or more orthogonal vectors indicated by the first indication information received by the first apparatus may be changed (for example, a transmitter of the first indication information may change the one or more orthogonal vectors indicated by the first indication information), to flexibly indicate the resource pattern of the reference signal. In addition, a plurality of candidate orthogonal vectors or a method for generating a plurality of candidate orthogonal vectors may be predefined. In this case, the first indication information indicates the M orthogonal vectors in the plurality of candidate orthogonal vectors. Compared with a direct indication of the RS resource pattern, the indication of the M orthogonal vectors can significantly reduce indication overheads.

In a possible implementation, the first indication information includes indexes and/or dimensions of the M orthogonal vectors; or the first indication information includes a first moment, and the first moment corresponds to indexes and/or dimensions of the M orthogonal vectors.

In the method, the plurality of candidate orthogonal vectors or the method for generating a plurality of candidate orthogonal vectors may be predefined. In this case, the first indication information indicates the indexes and/or the dimensions of the M orthogonal vectors in the plurality of candidate orthogonal vectors. Compared with a direct indication of the resource of the reference signal, the indication of the indexes and/or the dimensions of the M orthogonal vectors can significantly reduce indication overheads. Optionally, the first indication information may further include the first moment (for example, a specified moment, where the moment may be a moment before a current moment), and the first moment corresponds to the indexes and/or the dimensions of the M orthogonal vectors. When the first indication information includes the first moment, it is equivalent to that the first indication information indicates the M orthogonal vectors corresponding to the first moment.

In a possible implementation, the M orthogonal vectors belong to one orthogonal vector set, all orthogonal vectors in the orthogonal vector set correspond to a same candidate resource of the reference signal, the candidate resource of the reference signal includes resources in one or more domains, and the one or more domains includes one or more of time domain, frequency domain, and spatial domain. The candidate resource of the reference signal is a set of resources that can be used to send or receive the reference signal.

In a possible implementation, a resource included in the first resource pattern of the reference signal belongs to the candidate resource of the reference signal, and there is a mapping relationship between a dimension of each of the M orthogonal vectors and a number of resources in the candidate resource of the reference signal.

In a possible implementation, that there is the mapping relationship between the dimension of each of the M orthogonal vectors and the number of resources in the candidate resource of the reference signal includes:

if the candidate resource includes a resource in one domain, the dimension of each of the M orthogonal vectors is a number of resources in the resource in the domain; and

if the candidate resource includes resources in a plurality of domains, the dimension of each of the M orthogonal vectors is a product of numbers of resources in the resources in the plurality of domains.

In the foregoing method, it is assumed that each of the M orthogonal vectors corresponds to the same candidate resource of the reference signal. In this case, the M orthogonal vectors belong to one orthogonal vector set. There is a mapping relationship between the first resource pattern of the reference signal and the M orthogonal vectors included in the orthogonal vector set.

In a possible implementation, the first resource pattern of the reference signal is a resource pattern formed by candidate resources corresponding to a group of linearly irrelevant row vectors of a first sub-unitary matrix. The first sub-unitary matrix is formed by arranging the M orthogonal vectors by column, and there is a one-to-one mapping relationship between the row vector of the first sub-unitary matrix and the candidate resource of the reference signal.

In a possible implementation, the first resource pattern of the reference signal is a resource pattern formed by candidate resources corresponding to a group of linearly irrelevant column vectors of a first sub-unitary matrix. The first sub-unitary matrix is formed by arranging the M orthogonal vectors by row, and there is a one-to-one mapping relationship between the column vector of the first sub-unitary matrix and the candidate resource of the reference signal.

In a possible implementation, the first apparatus arranges the M orthogonal vectors by column, to form the first sub-unitary matrix, and there is a one-to-one mapping relationship between the row vector of the first sub-unitary matrix and the candidate resource of the reference signal. The first apparatus selects a group of linearly irrelevant row vectors from the first sub-unitary matrix, and the resource pattern including the candidate resource corresponding to the group of linearly irrelevant row vectors is the first resource pattern of the reference signal.

In a possible implementation, the first apparatus arranges the M orthogonal vectors by row, to form the first sub-unitary matrix, and there is a one-to-one mapping relationship between the column vector of the first sub-unitary matrix and the candidate resource of the reference signal. The first apparatus selects a group of linearly irrelevant column vectors from the first sub-unitary matrix, and a resource pattern formed by candidate resources corresponding to the group of linearly irrelevant column vectors is the first resource pattern of the reference signal.

In the foregoing method, the first apparatus may determine the first resource pattern of the reference signal based on a predefined method for determining a resource pattern of a reference signal based on one orthogonal vector set. For example, the M orthogonal vectors are arranged by row or by column, to form the first sub-unitary matrix, and then the corresponding first resource pattern of the reference signal is determined based on the first sub-unitary matrix, so that the resource pattern of the reference signal is derived based on the first indication information.

In a possible implementation, the M orthogonal vectors belong to a plurality of orthogonal vector sets, all orthogonal vectors included in each orthogonal vector set correspond to a same candidate resource of the reference signal, different orthogonal vector sets correspond to different candidate resources of the reference signal, the plurality of orthogonal vector sets correspond to resources included in a combination of different candidate resources of the reference signal, the candidate resource of the reference signal includes resources in one or more domains, and the one or more domains includes one or more of time domain, frequency domain, and spatial domain.

In a possible implementation, a resource included in the first resource pattern of the reference signal belongs to the resources included in the combination of the candidate resources of the reference signal that correspond to the plurality of orthogonal vector sets. There is a mapping relationship between a dimension of each orthogonal vector in any one of the plurality of orthogonal vector sets and a number of resources in a candidate resource corresponding to the orthogonal vector set.

In a possible implementation, that there is the mapping relationship between the dimension of each orthogonal vector in any one of the plurality of orthogonal vector sets and the number of resources in the candidate resource corresponding to the orthogonal vector set includes:

if the candidate resource corresponding to the any orthogonal vector set includes a resource in one domain, the dimension of each orthogonal vector in the orthogonal vector set is a number of resources in the resource in the domain; and

if the candidate resource corresponding to the any orthogonal vector set includes resources in a plurality of domains, the dimension of each orthogonal vector in the orthogonal vector set is a product of numbers of resources in the resources in the plurality of domains.

In the foregoing method, it is assumed that the M orthogonal vectors belong to the plurality of orthogonal vector sets, and the plurality of orthogonal vector sets respectively correspond to the resources included in the combination of the candidate resources of the reference signal. For example, a 1st orthogonal vector set may correspond to a resource in one domain, for example, frequency domain, and a 2nd orthogonal vector set corresponds to a resource in one domain, for example, spatial domain. Candidate resources of the reference signal that correspond to the two orthogonal vector sets are resources included in a combination of a frequency domain resource and a spatial domain resource, and the resource included in the first resource pattern of the reference signal belongs to the candidate resources of the reference signal.

In a possible implementation, the first resource pattern of the reference signal is a resource pattern formed by candidate resources corresponding to a group of linearly irrelevant row vectors of a second sub-unitary matrix. There is a one-to-one mapping relationship between the row vector of the second sub-unitary matrix and the resources included in the combination of the candidate resources of the reference signal that correspond to the plurality of orthogonal vector sets, and the second sub-unitary matrix is a Kronecker product of a plurality of first sub-unitary matrices. One first sub-unitary matrix is formed by arranging an orthogonal vector included in one orthogonal vector set by column, and there is a one-to-one mapping relationship between a row vector of the first sub-unitary matrix and a candidate resource, of the reference signal, corresponding to the orthogonal vector set.

In a possible implementation, the first resource pattern of the reference signal is a resource pattern formed by candidate resources corresponding to a group of linearly irrelevant column vectors of a second sub-unitary matrix. There is a one-to-one mapping relationship between the column vector of the second sub-unitary matrix and the resources included in the combination of the candidate resources of the reference signal that correspond to the plurality of orthogonal vector sets, and the second sub-unitary matrix is a Kronecker product of a plurality of first sub-unitary matrices. One first sub-unitary matrix is formed by arranging an orthogonal vector included in one orthogonal vector set by row, and there is a one-to-one mapping relationship between a column vector of the first sub-unitary matrix and a candidate resource, of the reference signal, corresponding to the orthogonal vector set.

In a possible implementation, the first apparatus arranges, according to a predefined arrangement rule, the plurality of orthogonal vector sets to which the M orthogonal vectors belong, to separately form the plurality of first sub-unitary matrices by column, and there is a one-to-one mapping relationship between a row vector of a first sub-unitary matrix and a candidate resource, of the reference signal, corresponding to one orthogonal vector set. The first apparatus performs Kronecker product processing on the plurality of first sub-unitary matrices, to obtain one second sub-unitary matrix, and there is a one-to-one mapping relationship between a row vector of the second sub-unitary matrix and the resources included in the combination of the candidate resources of the reference signal that correspond to the plurality of orthogonal vector sets. The first apparatus selects a group of linearly irrelevant row vectors from the second sub-unitary matrix, and a resource pattern formed by candidate resources corresponding to the group of linearly irrelevant row vectors is the first resource pattern of the reference signal.

In a possible implementation, the first apparatus arranges, according to a predefined arrangement rule, the plurality of orthogonal vector sets to which the M orthogonal vectors belong, to separately form the plurality of first sub-unitary matrices by row, and there is a one-to-one mapping relationship between a column vector of a first sub-unitary matrix and a candidate resource, of the reference signal, corresponding to one orthogonal vector set. The first apparatus performs Kronecker product processing on the plurality of first sub-unitary matrices, to obtain one second sub-unitary matrix, and there is a one-to-one mapping relationship between a column vector of the second sub-unitary matrix and the resources included in the combination of the candidate resources of the reference signal that correspond to the plurality of orthogonal vector sets. The first apparatus selects a group of linearly irrelevant column vectors from the second sub-unitary matrix, and a resource pattern formed by candidate resources corresponding to the group of linearly irrelevant column vectors is the first resource pattern of the reference signal.

In the foregoing method, the first apparatus may determine the first resource pattern of the reference signal based on a predefined method for determining a resource pattern of a reference signal based on a plurality of orthogonal vector sets. For example, the plurality of orthogonal vectors to which the M orthogonal vectors belong are arranged by row or by column, to form the plurality of first sub-unitary matrices, and then the second sub-unitary matrix is determined based on the plurality of first sub-unitary matrices, so that the corresponding first resource pattern of the reference signal is determined based on the second sub-unitary matrix. Therefore, the resource pattern of the reference signal is derived based on the first indication information.

In a possible implementation, the first apparatus determines second indication information, where the second indication information indicates N orthogonal vectors. There is a mapping relationship between N orthogonal vectors and a second resource pattern of the reference signal, where N is a positive integer. The first apparatus sends the second indication information.

In a possible implementation, the second indication information includes indexes and/or dimensions of the N orthogonal vectors; or the second indication information includes a second moment, and the second moment corresponds to indexes and/or dimensions of the N orthogonal vectors. The N orthogonal vectors are the same as or different from the M orthogonal vectors.

In the foregoing method, the first apparatus may determine an appropriate second resource pattern of the reference signal (for example, based on channel information obtained based on a historical reference signal or sensing signal), and determine the N orthogonal vectors based on the second resource pattern. There is a mapping relationship between N orthogonal vectors and the second resource pattern of the reference signal. The resource pattern may be the same as or different from the first resource pattern. For example, the first apparatus determines the N orthogonal vectors. It is assumed that the N orthogonal vectors are different from the M orthogonal vectors. In this case, the first apparatus needs to receive the first indication information, to obtain the M orthogonal vectors. If the N orthogonal vectors are the same as the M orthogonal vectors, the first apparatus may receive the first indication information, or may not need to receive the first indication information. The first indication information does not need to be received, to reduce signaling overheads.

In the implementation in which the first apparatus determines and sends the second indication information, the first apparatus determines the first resource pattern of the reference signal based on the second indication information.

In the method, the first apparatus may send the second indication information to the second apparatus. It is assumed that the second apparatus does not send the first indication information to the first apparatus. In this case, the first apparatus may directly determine, based on the second indication information, that a resource pattern corresponding to the N orthogonal vectors indicated by the second indication information is the first resource pattern of the reference signal.

In the implementation in which the first apparatus determines and sends the second indication information, if the M orthogonal vectors are the same as the N orthogonal vectors, the second apparatus does not need to send the first indication information. If the first apparatus does not receive the first indication information, the first apparatus determines the first resource pattern of the reference signal based on the second indication information.

In the implementation in which the first apparatus determines and sends the second indication information, if the M orthogonal vectors are different from the N orthogonal vectors, the second apparatus sends the first indication information. If the first apparatus receives the first indication information, the first apparatus determines the first resource pattern of the reference signal based on the first indication information.

In a possible implementation, the first apparatus receives third indication information, where the third indication information indicates one or more bandwidth resources. The one or more bandwidth resources are associated with the first resource pattern.

In a possible implementation, the plurality of bandwidth resources include a first bandwidth resource and a second bandwidth resource, and a resource pattern corresponding to the second bandwidth resource is the same as a resource pattern corresponding to the first bandwidth resource, or first indication information corresponding to the second bandwidth resource is the same as first indication information corresponding to the first bandwidth resource, or one or more orthogonal vectors corresponding to the second bandwidth resource are the same as one or more orthogonal vectors corresponding to the first bandwidth resource.

In the foregoing method, the first apparatus may further receive the third indication information indicating the one or more bandwidth resources, and the one or more bandwidth resources are associated with the first resource pattern. For example, it is assumed that the plurality of bandwidth resources may correspond to a same resource pattern, that is, the plurality of bandwidth resources may correspond to same first indication information or a same orthogonal vector. This helps reduce indication overheads of the resource pattern of the reference signal.

In a possible implementation, the first apparatus sends fourth indication information, where the fourth indication information indicates one or more bandwidth resources. The one or more bandwidth resources are associated with the second resource pattern.

In a possible implementation, the plurality of bandwidth resources include a third bandwidth resource and a fourth bandwidth resource, and a resource pattern corresponding to the fourth bandwidth resource is the same as a resource pattern corresponding to the third bandwidth resource, or second indication information corresponding to the fourth bandwidth resource is the same as second indication information corresponding to the third bandwidth resource, or one or more orthogonal vectors corresponding to the fourth bandwidth resource are the same as one or more orthogonal vectors corresponding to the third bandwidth resource.

In the foregoing method, for the second indication information determined and sent by the first apparatus and the second resource pattern, of the reference signal, corresponding to the second indication information, the first apparatus may further send the fourth indication information indicating the one or more bandwidth resources. The one or more bandwidth resources are associated with the second resource pattern. For example, it is assumed that the plurality of bandwidth resources may correspond to a same resource pattern, that is, the plurality of bandwidth resources may correspond to same second indication information or a same orthogonal vector. This helps reduce indication overheads of the resource pattern of the reference signal.

In a possible implementation, the first indication information or the second indication information is configured by radio resource control RRC, or is indicated by downlink control information DCI or a media access control control element MAC-CE.

In the method, the first indication information or the second indication information may be configured by the RRC, or may be indicated by the DCI or the MAC-CE, that is, may be flexibly indicated.

In a possible implementation, an update period of the first indication information or the second indication information is periodic, aperiodic, or semi-persistent.

In the method, for different reference signals (for example, periodic, aperiodic, or semi-persistent reference signals), update periods of the first indication information or the second indication information are different.

In a possible implementation, the orthogonal vector set includes an orthogonal vector in a discrete Fourier transform DFT matrix, or a discrete cosine transform DCT matrix, or a Grassmannian Grassmannian manifold.

According to a second aspect, this application provides a communication method. The method is performed by a second apparatus. The second apparatus may be a network device, or may be a component (for example, a processor, a chip, or a chip system) of the network device, or may be a logical module that can implement all or a part of functions of the network device. The second apparatus determines first indication information, where the first indication information indicates M orthogonal vectors, and there is a mapping relationship between the M orthogonal vectors and a first resource pattern of a reference signal. The second apparatus sends the first indication information.

In the method, the second apparatus may send the first indication information to a first apparatus, where the first indication information may indicate the M orthogonal vectors, and there is a mapping relationship between the M orthogonal vectors and the first resource pattern of the reference signal. Therefore, the second apparatus may flexibly indicate the resource pattern of the reference signal by changing one or more orthogonal vectors indicated by the first indication information. Compared with a direct indication of the RS resource pattern, the indication of the M orthogonal vectors can significantly reduce indication overheads of the reference signal.

In a possible implementation, the first indication information includes indexes and/or dimensions of the M orthogonal vectors; or the first indication information includes a first moment, and the first moment corresponds to indexes and/or dimensions of the M orthogonal vectors.

In the method, the plurality of candidate orthogonal vectors or the method for generating a plurality of candidate orthogonal vectors may be predefined. In this case, the first indication information indicates the indexes and/or the dimensions of the M orthogonal vectors in the plurality of candidate orthogonal vectors. Compared with a direct indication of the resource pattern of the reference signal, the indication of the indexes and/or the dimensions of the M orthogonal vectors can significantly reduce indication overheads. Optionally, the first indication information may further include the first moment (for example, a specified moment, where the moment may be a moment before a current moment), and the first moment corresponds to the indexes and/or the dimensions of the M orthogonal vectors. When the first indication information includes the first moment, it is equivalent to that the first indication information indicates the M orthogonal vectors corresponding to the first moment.

In a possible implementation, the M orthogonal vectors belong to one orthogonal vector set, all orthogonal vectors in the orthogonal vector set correspond to a same candidate resource of the reference signal, the candidate resource of the reference signal includes resources in one or more domains, and the one or more domains includes one or more of time domain, frequency domain, and spatial domain. The candidate resource of the reference signal is a set of resources that can be used to send or receive the reference signal.

In a possible implementation, a resource included in the first resource pattern of the reference signal belongs to the candidate resource of the reference signal, and there is a mapping relationship between a dimension of each of the M orthogonal vectors and a number of resources in the candidate resource of the reference signal.

In a possible implementation, that there is the mapping relationship between the dimension of each of the M orthogonal vectors and the number of resources in the candidate resource of the reference signal includes:

if the candidate resource includes a resource in one domain, the dimension of each of the M orthogonal vectors is a number of resources in the resource in the domain; and
if the candidate resource includes resources in a plurality of domains, the dimension of each of the M orthogonal vectors is a product of numbers of resources in the resources in the plurality of domains.

In the foregoing method, it is assumed that each of the M orthogonal vectors corresponds to the same candidate resource of the reference signal. In this case, the M orthogonal vectors belong to one orthogonal vector set. There is a mapping relationship between the first resource pattern of the reference signal and the M orthogonal vectors included in the orthogonal vector set.

In a possible implementation, the first resource pattern of the reference signal is a resource pattern formed by candidate resources corresponding to a group of linearly irrelevant row vectors of a first sub-unitary matrix. The first sub-unitary matrix is formed by arranging the M orthogonal vectors by column, and there is a one-to-one mapping relationship between the row vector of the first sub-unitary matrix and the candidate resource of the reference signal.

In a possible implementation, the first resource pattern of the reference signal is a resource pattern formed by candidate resources corresponding to a group of linearly irrelevant column vectors of a first sub-unitary matrix. The first sub-unitary matrix is formed by arranging the M orthogonal vectors by row, and there is a one-to-one mapping relationship between the column vector of the first sub-unitary matrix and the candidate resource of the reference signal.

In the foregoing method, the resource pattern of the reference signal may be determined based on one or more predefined orthogonal vectors. The orthogonal vector indicated by the second apparatus to the first apparatus may enable the first apparatus to derive the resource pattern of the reference signal.

In a possible implementation, the M orthogonal vectors belong to a plurality of orthogonal vector sets, all orthogonal vectors included in each orthogonal vector set correspond to a same candidate resource of the reference signal, different orthogonal vector sets correspond to different candidate resources of the reference signal, the plurality of orthogonal vector sets correspond to resources included in a combination of different candidate resources of the reference signal, the candidate resource of the reference signal includes resources in one or more domains, and the one or more domains includes one or more of time domain, frequency domain, and spatial domain.

In a possible implementation, a resource included in the first resource pattern of the reference signal belongs to the resources included in the combination of the candidate resources of the reference signal that correspond to the plurality of orthogonal vector sets. There is a mapping relationship between a dimension of each orthogonal vector in any one of the plurality of orthogonal vector sets and a number of resources in a candidate resource corresponding to the orthogonal vector set.

In a possible implementation, that there is the mapping relationship between the dimension of each orthogonal vector in any one of the plurality of orthogonal vector sets and the number of resources in the candidate resource corresponding to the orthogonal vector set includes:

if the candidate resource corresponding to the any orthogonal vector set includes a resource in one domain, the dimension of each orthogonal vector in the orthogonal vector set is a number of resources in the resource in the domain; and

if the candidate resource corresponding to the any orthogonal vector set includes resources in a plurality of domains, the dimension of each orthogonal vector in the orthogonal vector set is a product of numbers of resources in the resources in the plurality of domains.

In the foregoing method, it is assumed that the M orthogonal vectors belong to the plurality of orthogonal vector sets, and the plurality of orthogonal vector sets respectively correspond to the resources included in the combination of the candidate resources of the reference signal. For example, a 1st orthogonal vector set may correspond to a resource in one domain, for example, frequency domain, and a 2nd orthogonal vector set corresponds to a resource in one domain, for example, spatial domain. Candidate resources of the reference signal that correspond to the two orthogonal vector sets are resources included in a combination of a frequency domain resource and a spatial domain resource, and the resource included in the first resource pattern of the reference signal belongs to the candidate resources of the reference signal.

In a possible implementation, the first resource pattern of the reference signal is a resource pattern formed by candidate resources corresponding to a group of linearly irrelevant row vectors of a second sub-unitary matrix. There is a one-to-one mapping relationship between the row vector of the second sub-unitary matrix and the resources included in the combination of the candidate resources of the reference signal that correspond to the plurality of orthogonal vector sets, and the second sub-unitary matrix is a Kronecker product of a plurality of first sub-unitary matrices. One first sub-unitary matrix is formed by arranging an orthogonal vector included in one orthogonal vector set by column, and there is a one-to-one mapping relationship between a row vector of the first sub-unitary matrix and a candidate resource, of the reference signal, corresponding to the orthogonal vector set.

In a possible implementation, the first resource pattern of the reference signal is a resource pattern formed by candidate resources corresponding to a group of linearly irrelevant column vectors of a second sub-unitary matrix. There is a one-to-one mapping relationship between the column vector of the second sub-unitary matrix and the resources included in the combination of the candidate resources of the reference signal that correspond to the plurality of orthogonal vector sets, and the second sub-unitary matrix is a Kronecker product of a plurality of first sub-unitary matrices. One first sub-unitary matrix is formed by arranging an orthogonal vector included in one orthogonal vector set by row, and there is a one-to-one mapping relationship between a column vector of the first sub-unitary matrix and a candidate resource, of the reference signal, corresponding to the orthogonal vector set.

In the foregoing method, the resource pattern of the reference signal may be determined based on one or more predefined orthogonal vectors. The orthogonal vector indicated by the second apparatus to the first apparatus may enable the first apparatus to derive the resource pattern of the reference signal.

In a possible implementation, the second apparatus receives second indication information, where the second indication information indicates N orthogonal vectors. There is a mapping relationship between N orthogonal vectors and a second resource pattern of the reference signal, where N is a positive integer.

In a possible implementation, the second indication information includes indexes and/or dimensions of the N orthogonal vectors; or the second indication information includes a second moment, and the second moment corresponds to indexes and/or dimensions of the N orthogonal vectors. The N orthogonal vectors are the same as or different from the M orthogonal vectors.

In the foregoing method, the second apparatus may receive the second indication information indicating the N orthogonal vectors, and the first apparatus determines (for example, based on channel information obtained based on a historical reference signal or sensing signal) that the N orthogonal vectors are an appropriate second resource pattern of the reference signal. The N orthogonal vectors are determined based on the second resource pattern, there is a mapping relationship between N orthogonal vectors and the resource pattern of the reference signal, and the resource pattern may be the same as or different from the first resource pattern.

In a possible implementation, the first apparatus sends third indication information, where the third indication information indicates one or more bandwidth resources. The one or more bandwidth resources are associated with the first resource pattern.

In a possible implementation, the plurality of bandwidth resources include a first bandwidth resource and a second bandwidth resource, and a resource pattern corresponding to the second bandwidth resource is the same as a resource pattern corresponding to the first bandwidth resource, or first indication information corresponding to the second bandwidth resource is the same as first indication information corresponding to the first bandwidth resource, or one or more orthogonal vectors corresponding to the second bandwidth resource are the same as one or more orthogonal vectors corresponding to the first bandwidth resource.

In the foregoing method, the second apparatus may further send the third indication information indicating the one or more bandwidth resources, and the one or more bandwidth resources are associated with the first resource pattern. For example, it is assumed that the plurality of bandwidth resources may correspond to a same resource pattern, that is, the plurality of bandwidth resources may correspond to same first indication information or a same orthogonal vector. This helps reduce indication overheads of the resource pattern of the reference signal.

In a possible implementation, the second apparatus receives fourth indication information, where the fourth indication information indicates one or more bandwidth resources. The one or more bandwidth resources are associated with the second resource pattern.

In a possible implementation, the plurality of bandwidth resources include a third bandwidth resource and a fourth bandwidth resource, and a resource pattern corresponding to the fourth bandwidth resource is the same as a resource pattern corresponding to the third bandwidth resource, or second indication information corresponding to the fourth bandwidth resource is the same as second indication information corresponding to the third bandwidth resource, or one or more orthogonal vectors corresponding to the fourth bandwidth resource are the same as one or more orthogonal vectors corresponding to the third bandwidth resource.

In the foregoing method, for the second indication information determined and sent by the first apparatus and the second resource pattern, of the reference signal, corresponding to the second indication information, the second apparatus receives the fourth indication information indicating the one or more bandwidth resources. The one or more bandwidth resources are associated with the second resource pattern. For example, it is assumed that the plurality of bandwidth resources may correspond to a same resource pattern, that is, the plurality of bandwidth resources may correspond to same second indication information or a same orthogonal vector. This helps reduce indication overheads of the resource pattern of the reference signal.

In a possible implementation, the first indication information or the second indication information is configured by radio resource control RRC, or is indicated by downlink control information DCI or a media access control control element MAC-CE.

In the method, the first indication information or the second indication information may be configured by the RRC, or may be indicated by the DCI or the MAC-CE, that is, may be flexibly indicated.

In a possible implementation, an update period of the first indication information or the second indication information is periodic, aperiodic, or semi-persistent.

In the method, for different reference signals (for example, periodic, aperiodic, or semi-persistent reference signals), update periods of the first indication information or the second indication information are different.

In a possible implementation, the orthogonal vector set includes an orthogonal vector in a discrete Fourier transform DFT matrix, or a discrete cosine transform DCT matrix, or a Grassmannian Grassmannian manifold.

According to a third aspect, this application provides a communication method. The method is performed by a first apparatus. The first apparatus may be a terminal, or may be a component (for example, a processor, a chip, or a chip system) of the terminal, or may be a logical module that can implement all or a part of functions of the terminal. The first apparatus sends second indication information, where the second indication information indicates N orthogonal vectors, and there is a mapping relationship between the N orthogonal vectors and a second resource pattern of the reference signal. The first apparatus determines a first resource pattern of the reference signal based on the second indication information, where the first resource pattern is the same as the second resource pattern.

In the method, the first apparatus may determine an appropriate second resource pattern of the reference signal (for example, based on channel information obtained based on a historical reference signal or sensing signal), and determine the N orthogonal vectors based on the second resource pattern. There is a mapping relationship between N orthogonal vectors and the resource pattern of the reference signal. In addition, when the second resource pattern is the same as a first resource pattern, of the reference signal, determined by the second apparatus, the first apparatus does not need to receive the indication information, and may directly determine the first resource pattern of the reference signal based on the second indication information, to further reduce indication overheads of the reference signal.

In a possible implementation, when the first apparatus does not receive first indication information in a preset time period after sending the second indication information, the first apparatus determines the first resource pattern of the reference signal based on the second indication information.

In the method, a condition that the first apparatus determines that the second resource pattern is the same as the first resource pattern may be that the first apparatus does not receive the first indication information in a detection time period after sending the second indication information. In this case, the first apparatus may not receive the first indication information, and directly determine the first resource pattern of the reference signal.

In a possible implementation, the second indication information includes indexes and/or dimensions of the N orthogonal vectors; or the second indication information includes a second moment, and the second moment corresponds to indexes and/or dimensions of the N orthogonal vectors. The N orthogonal vectors are the same as or different from the M orthogonal vectors.

In a possible implementation, the second indication information is configured by radio resource control RRC, or is indicated by downlink control information DCI or a media access control control element MAC-CE.

In a possible implementation, an update period of the second indication information is periodic, aperiodic, or semi-persistent.

According to a fourth aspect, this application provides a communication apparatus. The communication apparatus may be a terminal, or may be an apparatus in the terminal, or may be an apparatus that can be used in combination with the terminal. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to receive first indication information, where the first indication information indicates M orthogonal vectors, and there is a mapping relationship between the M orthogonal vectors and a first resource pattern of a reference signal. The processing unit is configured to determine the first resource pattern of the reference signal based on the first indication information.

In a possible implementation, the first indication information includes indexes and/or dimensions of the M orthogonal vectors; or the first indication information includes a first moment, and the first moment corresponds to indexes and/or dimensions of the M orthogonal vectors.

In a possible implementation, the M orthogonal vectors belong to one orthogonal vector set, all orthogonal vectors in the orthogonal vector set correspond to a same candidate resource of the reference signal, the candidate resource of the reference signal includes resources in one or more domains, and the one or more domains includes one or more of time domain, frequency domain, and spatial domain. The candidate resource of the reference signal is a set of resources that can be used to send or receive the reference signal.

In a possible implementation, the candidate resource of the reference signal includes a resource corresponding to the first resource pattern of the reference signal, and there is a mapping relationship between a dimension of each of the M orthogonal vectors and a number of resources in the candidate resource of the reference signal.

In a possible implementation, that there is the mapping relationship between the dimension of each of the M orthogonal vectors and the number of resources in the candidate resource of the reference signal includes:

if the candidate resource includes a resource in one domain, the dimension of each of the M orthogonal vectors is a number of resources in the resource in the domain; and
if the candidate resource includes resources in a plurality of domains, the dimension of each of the M orthogonal vectors is a product of numbers of resources in the resources in the plurality of domains.

In a possible implementation, the first resource pattern of the reference signal is a resource pattern formed by candidate resources corresponding to a group of linearly irrelevant row vectors of a first sub-unitary matrix. The first sub-unitary matrix is formed by arranging the M orthogonal vectors by column, and there is a one-to-one mapping relationship between the row vector of the first sub-unitary matrix and the candidate resource of the reference signal.

In a possible implementation, the first resource pattern of the reference signal is a resource pattern formed by candidate resources corresponding to a group of linearly irrelevant column vectors of a first sub-unitary matrix. The first sub-unitary matrix is formed by arranging the M orthogonal vectors by row, and there is a one-to-one mapping relationship between the column vector of the first sub-unitary matrix and the candidate resource of the reference signal.

In a possible implementation, the processing unit is configured to arrange the M orthogonal vectors by column, to form the first sub-unitary matrix, and there is a one-to-one mapping relationship between the row vector of the first sub-unitary matrix and the candidate resource of the reference signal. The processing unit is further configured to select a group of linearly irrelevant row vectors from the first sub-unitary matrix, and the resource pattern including the candidate resource corresponding to the group of linearly irrelevant row vectors is the first resource pattern of the reference signal.

In a possible implementation, the processing unit is configured to arrange the M orthogonal vectors by row, to form the first sub-unitary matrix, and there is a one-to-one mapping relationship between the column vector of the first sub-unitary matrix and the candidate resource of the reference signal. The processing unit is further configured to select a group of linearly irrelevant column vectors from the first sub-unitary matrix, and a resource pattern formed by candidate resources corresponding to the group of linearly irrelevant column vectors is the first resource pattern of the reference signal.

In a possible implementation, the M orthogonal vectors belong to a plurality of orthogonal vector sets, all orthogonal vectors included in each orthogonal vector set correspond to a same candidate resource of the reference signal, different orthogonal vector sets correspond to different candidate resources of the reference signal, the plurality of orthogonal vector sets correspond to resources included in a combination of different candidate resources of the reference signal, the candidate resource of the reference signal includes resources in one or more domains, and the one or more domains includes one or more of time domain, frequency domain, and spatial domain.

In a possible implementation, a resource included in the first resource pattern of the reference signal belongs to the resources included in the combination of the candidate resources of the reference signal that correspond to the plurality of orthogonal vector sets. There is a mapping relationship between a dimension of each orthogonal vector in any one of the plurality of orthogonal vector sets and a number of resources in a candidate resource corresponding to the orthogonal vector set.

In a possible implementation, that there is the mapping relationship between the dimension of each orthogonal vector in any one of the plurality of orthogonal vector sets and the number of resources in the candidate resource corresponding to the orthogonal vector set includes:

if the candidate resource corresponding to the any orthogonal vector set includes a resource in one domain, the dimension of each orthogonal vector in the orthogonal vector set is a number of resources in the resource in the domain; and
if the candidate resource corresponding to the any orthogonal vector set includes resources in a plurality of domains, the dimension of each orthogonal vector in the orthogonal vector set is a product of numbers of resources in the resources in the plurality of domains.

In a possible implementation, the first resource pattern of the reference signal is a resource pattern formed by candidate resources corresponding to a group of linearly irrelevant row vectors of a second sub-unitary matrix. There is a one-to-one mapping relationship between the row vector of the second sub-unitary matrix and the resources included in the combination of the candidate resources of the reference signal that correspond to the plurality of orthogonal vector sets, and the second sub-unitary matrix is a Kronecker product of a plurality of first sub-unitary matrices. One first sub-unitary matrix is formed by arranging an orthogonal vector included in one orthogonal vector set by column, and there is a one-to-one mapping relationship between a row vector of the first sub-unitary matrix and a candidate resource, of the reference signal, corresponding to the orthogonal vector set.

In a possible implementation, the first resource pattern of the reference signal is a resource pattern formed by candidate resources corresponding to a group of linearly irrelevant column vectors of a second sub-unitary matrix. There is a one-to-one mapping relationship between the column vector of the second sub-unitary matrix and the resources included in the combination of the candidate resources of the reference signal that correspond to the plurality of orthogonal vector sets, and the second sub-unitary matrix is a Kronecker product of a plurality of first sub-unitary matrices. One first sub-unitary matrix is formed by arranging an orthogonal vector included in one orthogonal vector set by row, and there is a one-to-one mapping relationship between a column vector of the first sub-unitary matrix and a candidate resource, of the reference signal, corresponding to the orthogonal vector set.

In a possible implementation, the processing unit is configured to arrange, according to a predefined arrangement rule, the plurality of orthogonal vector sets to which the M orthogonal vectors belong, to separately form the plurality of first sub-unitary matrices by column, and there is a one-to-one mapping relationship between a row vector of a first sub-unitary matrix and a candidate resource, of the reference signal, corresponding to one orthogonal vector set. The processing unit is configured to perform Kronecker product processing on the plurality of first sub-unitary matrices, to obtain one second sub-unitary matrix, and there is a one-to-one mapping relationship between a row vector of the second sub-unitary matrix and the resources included in the combination of the candidate resources of the reference signal that correspond to the plurality of orthogonal vector sets. The processing unit is further configured to select a group of linearly irrelevant row vectors from the second sub-unitary matrix, and a resource pattern formed by candidate resources corresponding to the group of linearly irrelevant row vectors is the first resource pattern of the reference signal.

In a possible implementation, the processing unit is configured to arrange, according to a predefined arrangement rule, the plurality of orthogonal vector sets to which the M orthogonal vectors belong, to separately form the plurality of first sub-unitary matrices by row, and there is a one-to-one mapping relationship between a column vector of a first sub-unitary matrix and a candidate resource, of the reference signal, corresponding to one orthogonal vector set. The processing unit is further configured to perform Kronecker product processing on the plurality of first sub-unitary matrices, to obtain one second sub-unitary matrix, and there is a one-to-one mapping relationship between a column vector of the second sub-unitary matrix and the resources included in the combination of the candidate resources of the reference signal that correspond to the plurality of orthogonal vector sets. The processing unit is further configured to select a group of linearly irrelevant column vectors from the second sub-unitary matrix, and a resource pattern formed by candidate resources corresponding to the group of linearly irrelevant column vectors is the first resource pattern of the reference signal.

In a possible implementation, the processing unit is configured to determine second indication information, where the second indication information indicates N orthogonal vectors. There is a mapping relationship between N orthogonal vectors and a second resource pattern of the reference signal, where N is a positive integer. The communication unit is configured to send the second indication information.

In a possible implementation, the second indication information includes indexes and/or dimensions of the N orthogonal vectors; or the second indication information includes a second moment, and the second moment corresponds to indexes and/or dimensions of the N orthogonal vectors. The N orthogonal vectors are the same as or different from the M orthogonal vectors.

In a possible implementation, the processing unit is configured to determine the first resource pattern of the reference signal based on the second indication information.

In a possible implementation, if the M orthogonal vectors are the same as the N orthogonal vectors, the second apparatus does not need to send the first indication information. If the communication unit does not receive the first indication information, the processing unit is configured to determine the first resource pattern of the reference signal based on the second indication information.

In a possible implementation, if the M orthogonal vectors are different from the N orthogonal vectors, the communication unit is configured to send the first indication information. If the first apparatus receives the first indication information, the processing unit is configured to determine the first resource pattern of the reference signal based on the first indication information.

In a possible implementation, the communication unit is configured to receive third indication information, where the third indication information indicates one or more bandwidth resources. The one or more bandwidth resources are associated with the first resource pattern.

In a possible implementation, the plurality of bandwidth resources include a first bandwidth resource and a second bandwidth resource, and a resource pattern corresponding to the second bandwidth resource is the same as a resource pattern corresponding to the first bandwidth resource, or first indication information corresponding to the second bandwidth resource is the same as first indication information corresponding to the first bandwidth resource, or one or more orthogonal vectors corresponding to the second bandwidth resource are the same as one or more orthogonal vectors corresponding to the first bandwidth resource.

In a possible implementation, the communication unit is configured to send fourth indication information, where the fourth indication information indicates one or more bandwidth resources. The one or more bandwidth resources are associated with the second resource pattern.

In a possible implementation, the plurality of bandwidth resources include a third bandwidth resource and a fourth bandwidth resource, and a resource pattern corresponding to the fourth bandwidth resource is the same as a resource pattern corresponding to the third bandwidth resource, or second indication information corresponding to the fourth bandwidth resource is the same as second indication information corresponding to the third bandwidth resource, or one or more orthogonal vectors corresponding to the fourth bandwidth resource are the same as one or more orthogonal vectors corresponding to the third bandwidth resource.

In a possible implementation, the first indication information or the second indication information is configured by radio resource control RRC, or is indicated by downlink control information DCI or a media access control control element MAC-CE.

In a possible implementation, an update period of the first indication information or the second indication information is periodic, aperiodic, or semi-persistent.

In a possible implementation, the orthogonal vector set includes an orthogonal vector in a discrete Fourier transform DFT matrix, or a discrete cosine transform DCT matrix, or a Grassmannian Grassmannian manifold.

According to a fifth aspect, this application provides a communication apparatus. The communication apparatus may be a network device, an apparatus in the network device, or an apparatus that can be used in combination with the network device. In a possible implementation, the communication apparatus may include a functional module. The functional module may be implemented by a hardware circuit, software, or a combination of a hardware circuit and software.

In a possible implementation, the communication apparatus includes a communication unit and a processing unit. The processing unit is configured to determine first indication information, where the first indication information indicates M orthogonal vectors, and there is a mapping relationship between the M orthogonal vectors and a first resource pattern of a reference signal. The communication unit is configured to send the first indication information.

In a possible implementation, the first indication information includes indexes and/or dimensions of the M orthogonal vectors; or the first indication information includes a first moment, and the first moment corresponds to indexes and/or dimensions of the M orthogonal vectors.

In a possible implementation, the M orthogonal vectors belong to one orthogonal vector set, all orthogonal vectors in the orthogonal vector set correspond to a same candidate resource of the reference signal, the candidate resource of the reference signal includes resources in one or more domains, and the one or more domains includes one or more of time domain, frequency domain, and spatial domain.

In a possible implementation, a resource included in the first resource pattern of the reference signal belongs to the candidate resource of the reference signal, and there is a mapping relationship between a dimension of each of the M orthogonal vectors and a number of resources in the candidate resource of the reference signal.

In a possible implementation, that there is the mapping relationship between the dimension of each of the M orthogonal vectors and the number of resources in the candidate resource of the reference signal includes:

if the candidate resource includes a resource in one domain, the dimension of each of the M orthogonal vectors is a number of resources in the resource in the domain; and
if the candidate resource includes resources in a plurality of domains, the dimension of each of the M orthogonal vectors is a product of numbers of resources in the resources in the plurality of domains.

In a possible implementation, the first resource pattern of the reference signal is a resource pattern formed by candidate resources corresponding to a group of linearly irrelevant row vectors of a first sub-unitary matrix. The first sub-unitary matrix is formed by arranging the M orthogonal vectors by column, and there is a one-to-one mapping relationship between the row vector of the first sub-unitary matrix and the candidate resource of the reference signal.

In a possible implementation, the first resource pattern of the reference signal is a resource pattern formed by candidate resources corresponding to a group of linearly irrelevant column vectors of a first sub-unitary matrix. The first sub-unitary matrix is formed by arranging the M orthogonal vectors by row, and there is a one-to-one mapping relationship between the column vector of the first sub-unitary matrix and the candidate resource of the reference signal.

In a possible implementation, the M orthogonal vectors belong to a plurality of orthogonal vector sets, all orthogonal vectors included in each orthogonal vector set correspond to a same candidate resource of the reference signal, different orthogonal vector sets correspond to different candidate resources of the reference signal, the plurality of orthogonal vector sets correspond to resources included in a combination of different candidate resources of the reference signal, the candidate resource of the reference signal includes resources in one or more domains, and the one or more domains includes one or more of time domain, frequency domain, and spatial domain.

In a possible implementation, a resource included in the first resource pattern of the reference signal belongs to the resources included in the combination of the candidate resources of the reference signal that correspond to the plurality of orthogonal vector sets. There is a mapping relationship between a dimension of each orthogonal vector in any one of the plurality of orthogonal vector sets and a number of resources in a candidate resource corresponding to the orthogonal vector set.

In a possible implementation, that there is the mapping relationship between the dimension of each orthogonal vector in any one of the plurality of orthogonal vector sets and the number of resources in the candidate resource corresponding to the orthogonal vector set includes:

if the candidate resource corresponding to the any orthogonal vector set includes a resource in one domain, the dimension of each orthogonal vector in the orthogonal vector set is a number of resources in the resource in the domain; and
if the candidate resource corresponding to the any orthogonal vector set includes resources in a plurality of domains, the dimension of each orthogonal vector in the orthogonal vector set is a product of numbers of resources in the resources in the plurality of domains.

In a possible implementation, the first resource pattern of the reference signal is a resource pattern formed by candidate resources corresponding to a group of linearly irrelevant row vectors of a second sub-unitary matrix. There is a one-to-one mapping relationship between the row vector of the second sub-unitary matrix and the resources included in the combination of the candidate resources of the reference signal that correspond to the plurality of orthogonal vector sets, and the second sub-unitary matrix is a Kronecker product of a plurality of first sub-unitary matrices. One first sub-unitary matrix is formed by arranging an orthogonal vector included in one orthogonal vector set by column, and there is a one-to-one mapping relationship between a row vector of the first sub-unitary matrix and a candidate resource, of the reference signal, corresponding to the orthogonal vector set.

In a possible implementation, the first resource pattern of the reference signal is a resource pattern formed by candidate resources corresponding to a group of linearly irrelevant column vectors of a second sub-unitary matrix. There is a one-to-one mapping relationship between the column vector of the second sub-unitary matrix and the resources included in the combination of the candidate resources of the reference signal that correspond to the plurality of orthogonal vector sets, and the second sub-unitary matrix is a Kronecker product of a plurality of first sub-unitary matrices. One first sub-unitary matrix is formed by arranging an orthogonal vector included in one orthogonal vector set by row, and there is a one-to-one mapping relationship between a column vector of the first sub-unitary matrix and a candidate resource, of the reference signal, corresponding to the orthogonal vector set.

In a possible implementation, the communication unit is configured to receive second indication information, where the second indication information indicates N orthogonal vectors. There is a mapping relationship between N orthogonal vectors and a second resource pattern of the reference signal, where N is a positive integer.

In a possible implementation, the second indication information includes indexes and/or dimensions of the N orthogonal vectors; or the second indication information includes a second moment, and the second moment corresponds to indexes and/or dimensions of the N orthogonal vectors. The N orthogonal vectors are the same as or different from the M orthogonal vectors.

In a possible implementation, the communication unit is configured to send third indication information, where the third indication information indicates one or more bandwidth resources. The one or more bandwidth resources are associated with the first resource pattern.

In a possible implementation, the plurality of bandwidth resources include a first bandwidth resource and a second bandwidth resource, and a resource pattern corresponding to the second bandwidth resource is the same as a resource pattern corresponding to the first bandwidth resource, or first indication information corresponding to the second bandwidth resource is the same as first indication information corresponding to the first bandwidth resource, or one or more orthogonal vectors corresponding to the second bandwidth resource are the same as one or more orthogonal vectors corresponding to the first bandwidth resource.

In a possible implementation, the communication unit is configured to receive fourth indication information, where the fourth indication information indicates one or more bandwidth resources. The one or more bandwidth resources are associated with the second resource pattern.

In a possible implementation, the plurality of bandwidth resources include a third bandwidth resource and a fourth bandwidth resource, and a resource pattern corresponding to the fourth bandwidth resource is the same as a resource pattern corresponding to the third bandwidth resource, or second indication information corresponding to the fourth bandwidth resource is the same as second indication information corresponding to the third bandwidth resource, or one or more orthogonal vectors corresponding to the fourth bandwidth resource are the same as one or more orthogonal vectors corresponding to the third bandwidth resource.

In a possible implementation, the first indication information or the second indication information is configured by radio resource control RRC, or is indicated by downlink control information DCI or a media access control control element MAC-CE.

In a possible implementation, an update period of the first indication information or the second indication information is periodic, aperiodic, or semi-persistent.

In a possible implementation, the orthogonal vector set includes an orthogonal vector in a discrete Fourier transform DFT matrix, or a discrete cosine transform DCT matrix, or a Grassmannian Grassmannian manifold.

According to a sixth aspect, this application provides a communication apparatus. The communication apparatus may be a terminal, or may be an apparatus in the terminal, or may be an apparatus that can be used in combination with the terminal. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to send second indication information, where the second indication information indicates N orthogonal vectors, and there is a mapping relationship between the N orthogonal vectors and a second resource pattern of the reference signal. The processing unit is configured to determine a first resource pattern of the reference signal based on the second indication information, where the first resource pattern is the same as the second resource pattern.

In a possible implementation, when the communication unit does not receive first indication information in a preset time period after sending the second indication information, the processing unit is configured to determine the first resource pattern of the reference signal based on the second indication information.

In a possible implementation, the second indication information includes indexes and/or dimensions of the N orthogonal vectors; or the second indication information includes a second moment, and the second moment corresponds to indexes and/or dimensions of the N orthogonal vectors. The N orthogonal vectors are the same as or different from the M orthogonal vectors.

In a possible implementation, the second indication information is configured by radio resource control RRC, or is indicated by downlink control information DCI or a media access control control element MAC-CE.

In a possible implementation, an update period of the second indication information is periodic, aperiodic, or semi-persistent.

For the fourth aspect to the sixth aspect, in an example, the processing unit may be a processor, and the communication unit may be a transceiver unit, a transceiver, or a communication interface. It may be understood that when the communication apparatus is a communication device (for example, a terminal or a network device), the communication unit may be a transceiver (for example, the transceiver includes a transmitter and a receiver) in the communication apparatus, for example, implemented by using an antenna, a feeder, and a codec in the communication apparatus. Alternatively, if the communication apparatus is a chip disposed in a device, the processing unit may be a processing circuit, a logic circuit, or the like of the chip, and the communication unit may be an input/output interface of the chip, for example, an input/output circuit or a pin.

According to a seventh aspect, this application provides a communication apparatus, including a processor, configured to execute instructions. Optionally, the communication apparatus further includes a memory. The memory is configured to store the instructions. When the instructions are executed by the processor, the communication apparatus is enabled to implement the method in the first aspect and any possible implementation of the first aspect and the third aspect and any possible implementation of the third aspect. Optionally, the processor is coupled to the memory.

According to an eighth aspect, this application provides another communication apparatus, including a processor, configured to execute instructions. Optionally, the communication apparatus further includes a memory. The memory is configured to store the instructions. When the instructions are executed by the processor, the communication apparatus is enabled to implement the method in the second aspect and any possible implementation of the second aspect. Optionally, the processor is coupled to the memory.

According to a ninth aspect, this application provides a communication system. The communication system includes the plurality of apparatuses or devices in the fourth aspect to the eighth aspect, so that the apparatuses or devices perform the method in the first aspect to the third aspect and any possible implementation of the first aspect to the third aspect.

According to a tenth aspect, this application provides a computer-readable storage medium. The computer-readable storage medium stores instructions. When the instructions are run on a computer, the computer is enabled to perform the method in the first aspect to the third aspect and any possible implementation of the first aspect to the third aspect.

According to an eleventh aspect, this application provides a chip, and the chip includes a processor (or a logic circuit). Optionally, the chip may further include a communication interface (or an interface), configured to implement the method in the first aspect to the third aspect and any possible implementation of the first aspect to the third aspect. In a possible implementation, if the chip is the smallest processing unit in an entire system, the chip may be a processor, or may include a processor and a memory, or may include a processor, a memory, and a transceiver, to implement the method in the first aspect to the third aspect and any possible implementation of the first aspect to the third aspect.

According to a twelfth aspect, this application provides a chip system. The chip system includes a processor and an interface. Optionally, the chip system may further include a memory. The chip system is configured to implement the method in the first aspect to the third aspect and any possible implementation of the first aspect to the third aspect. The chip system may include a chip, or may include a chip and another discrete component.

According to a thirteenth aspect, this application provides a computer program product, including instructions. When the instructions are run on a computer, the computer is enabled to perform the method in the first aspect to the third aspect and any possible implementation of the first aspect to the third aspect.

## BRIEF DESCRIPTION OF DRAWINGS

FIG. 1 is a diagram of a communication system according to this application;
FIG. 2 is a diagram of a first resource pattern of a reference signal according to this application;
FIG. 3 is a schematic flowchart of a communication method according to this application;
FIG. 4 is a diagram of determining a first resource pattern of a reference signal based on a candidate resource corresponding to a group of linearly irrelevant row vectors according to this application;
FIG. 5 is a diagram of determining a first resource pattern of a reference signal based on a candidate resource corresponding to a group of linearly irrelevant column vectors according to this application;
FIG. 6 is a diagram of a correspondence between a sub-unitary matrix and a candidate resource of a reference signal according to this application;

FIG. 7 is a schematic flowchart of determining a resource pattern of a CSI-RS according to this application;

FIG. 8a is another schematic flowchart of determining a resource pattern of a CSI-RS according to this application;

FIG. 8b is still another schematic flowchart of determining a resource pattern of a CSI-RS according to this application;

FIG. 8c-1 and FIG. 8c-2 are yet another schematic flowchart of determining a resource pattern of a CSI-RS according to this application;

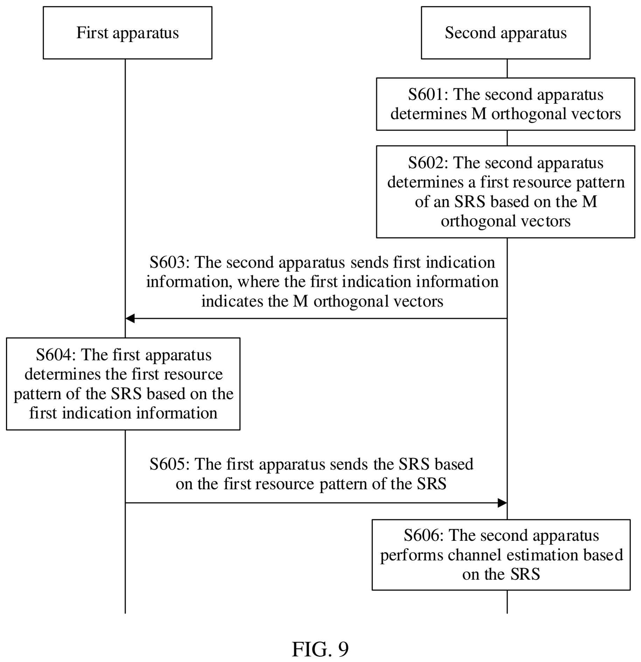

FIG. 9 is a schematic flowchart of determining a resource pattern of an SRS according to this application;

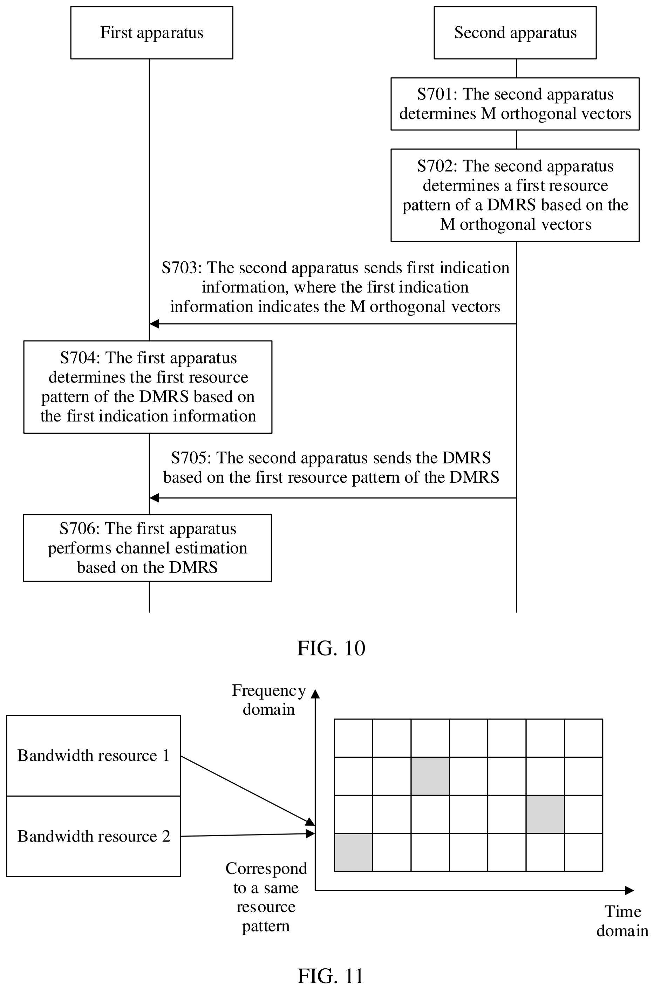

FIG. 10 is a schematic flowchart of determining a resource pattern of a DMRS according to this application;

FIG. 11 is a diagram in which a plurality of bandwidth resources correspond to a same resource pattern according to this application;

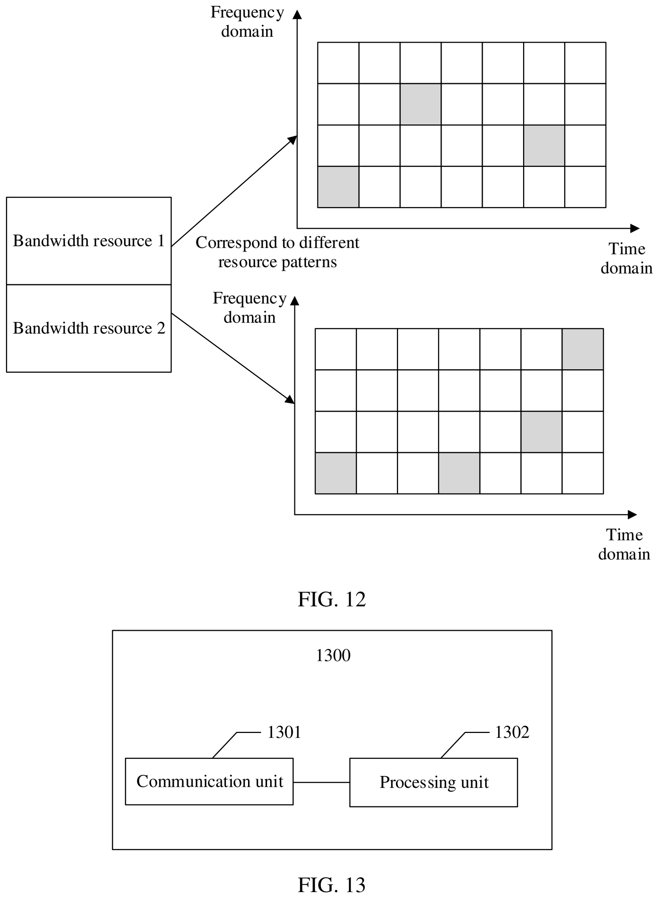

FIG. 12 is a diagram in which a plurality of bandwidth resources correspond to different resource patterns according to this application;

FIG. 13 is a diagram of a communication apparatus according to this application; and

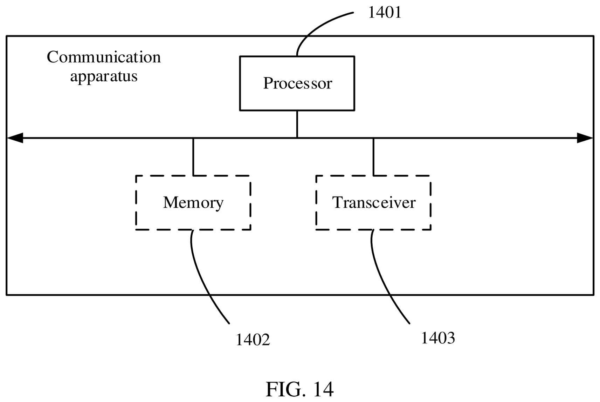

FIG. 14 is a diagram of another communication apparatus according to this application.

## DESCRIPTION OF EMBODIMENTS

In embodiments of this application, "/" may represent an "or" relationship between associated objects. For example, A/B may represent A or B. "And/or" may indicate that there are three relationships between associated objects. For example, A and/or B may represent the following three cases: Only A exists, both A and B exist, and only B exists, where A and B may be singular or plural. For ease of describing technical solutions in embodiments of this application, in embodiments of this application, the terms such as "first" and "second" may be used to distinguish technical features with a same or similar function. The terms such as "first" and "second" do not limit a number and an execution sequence, and the terms such as "first" and "second" do not limit a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. The word such as "example" or "for example" is used to present a related concept in a specific manner for ease of understanding.

The following describes the technical solutions in embodiments of this application with reference to accompanying drawings in embodiments of this application.

To reduce indication overheads of a reference signal, this application provides a communication method. Indication overheads of a reference signal in massive antennas can be greatly reduced by using the communication method.

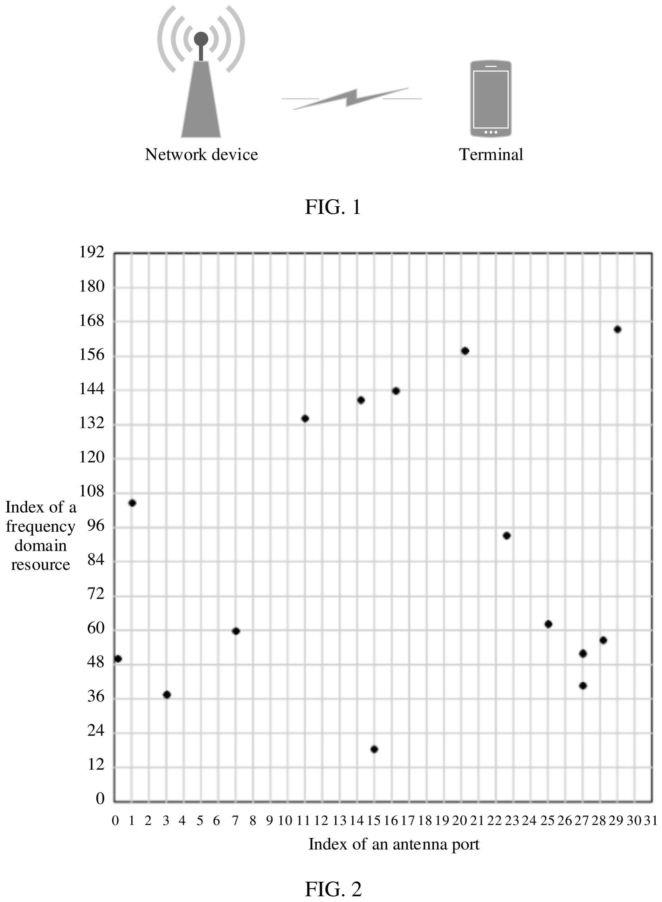

The communication method provided in this application may be applied to a communication system shown in FIG. 1. For example, the communication system includes a network device and a terminal.

The communication system in this application may include but is not limited to communication systems of various radio access technologies (radio access technology, RAT), for example, a narrowband Internet of things (narrowband Internet of things, NB-IoT) system, a long term evolution (long term evolution, LTE) communication system, a 5G (or referred to as new radio (new radio, NR)) communication system, and a transition system between the LTE communication system and the 5G communication system. The transition system may also be referred to as a 4.5G communication system. The communication system may alternatively be a future communication system, for example, a 6th generation (6th generation, 6G) system or even a 7th generation (7th generation, 7G) system. A network architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of communication network architectures and emergence of new service scenarios, the technical solutions provided in embodiments of this application are also applicable to similar technical problems.

The terminal is also referred to as a terminal (terminal) device, user equipment (user equipment, UE), a mobile station (mobile station, MS), a mobile terminal (mobile terminal, MT), or the like, and is a device that provides voice and/or data connectivity for a user, for example, a handheld device or a vehicle-mounted device having a wireless connection function. Currently, some examples of the terminal are: a mobile phone (mobile phone), a tablet computer, a notebook computer, a palmtop computer, a mobile Internet device (mobile Internet device, MID), a wearable device, an uncrewed aerial vehicle, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a terminal in a 5G network, a terminal in a future evolved network, a terminal in a future communication system, or the like.

The network device in this application is a radio access network (radio access network, RAN) node (or device) that connects the terminal to a wireless network, and may also be referred to as a base station. For example, examples of some RAN nodes are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a satellite in a satellite communication system, a radio controller in a cloud radio access network (cloud radio access network, CRAN) scenario, a wearable device, an uncrewed aerial vehicle, a device in Internet of vehicles (for example, a vehicle-to-everything (vehicle-to-everything, V2X) device), a communication device in device-to-device (device-to-device, D2D) communication, or the like.

In a possible implementation, the network device may include a central unit (central unit, CU) node, or a distributed unit (distributed unit, DU) node, or a RAN device including a CU node and a DU node. The RAN device including the CU node and the DU node splits protocol layers of an eNB in a long term evolution (long term evolution, LTE) system. Functions of a part of protocol layers are centrally controlled by a CU, functions of a part of or all of remaining protocol layers are distributed in a DU, and the CU centrally controls the DU. In some deployment of the network device, the CU may be further split into a CU-control plane (control plane, CP), a CU-user plane (user plane, UP), and the like. In another possible implementation, the network device may alternatively be an antenna unit (radio unit, RU), or the like. In still another possible implementation, the network device may alternatively be of an open radio access network (open radio access network, ORAN) architecture or the like. A specific type of the network device is not limited in this application. For example, when the network device is of the ORAN architecture, the network device in embodiments of this application may be an access network device in an ORAN, a module in the access network device, or the like. In an ORAN system, a CU may also be referred to as an open central unit (open CU, O-CU), a DU may also be referred to as an open distributed unit (O-DU), a CU-DU may also be referred to as an open central unit-distributed unit (O-CU-DU), a CU-UP may also be referred to as an open central unit-control plane (O-CU-UP), and an RU may also be referred to as an open antenna unit (O-RU). Optionally, Table 1 shows a correspondence between a network element in the ORAN system and a protocol layer function that can be implemented by the network element. Communication between the access network device and the terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

Table 1 ORAN network element and corresponding protocol layer function

| ORAN network element | 3GPP protocol layer function |
| --- | --- |
| O-CU-CP | RRC+PDCP-C |
| O-CU-UP | SDAP+PDCP-U |
| O-DU | RLC+MAC+PHY-high |
| O-RU | PHY-low |

It should be noted that "sending" and "receiving" in embodiments of this application represent signal transfer directions. For example, "sending information to a terminal" may be understood as a destination of the information being the terminal device. "Sending" may include direct sending through an air interface, or indirect sending by another unit or module through an air interface. "Receiving information from a network device" may be understood as a source of the information being the network device. "Receiving" may include direct receiving from the network device through an air interface, or indirect receiving from the network device from another unit or module through an air interface. "Sending" may alternatively be understood as "outputting" from a chip interface, and "receiving" may alternatively be understood as "inputting" into the chip interface.

In other words, sending and receiving may be performed between devices, for example, between the network device and the terminal device, or may be performed within a device, for example, sending or receiving is performed between components, modules, chips, software modules, or hardware modules within a device through a bus, a cable, or an interface.

It may be understood that necessary processing, such as coding and modulation, may be performed on the information between the source at which the information is sent and the destination, but the destination may understand valid information from the source. Similar descriptions in this application may be understood similarly, and details are not described again.

In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, the to-be-indicated information or an index of the to-be-indicated information. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining to-be-indicated information.

I. For ease of understanding, the following describes in detail definitions of related terms in this application.

1. Reference signal in this application

Reference signals in this application may include but are not limited to a demodulation reference signal (demodulation reference signal, DMRS), a sounding reference signal (sounding reference signal, SRS), a channel state information reference signal (channel state information reference signal, CSI-RS), and the like. Specifically, the DMRS is used by a receiver for channel estimation and for demodulation of a physical channel. NR DMRS port resources are orthogonal, frequency domain resources of each port are evenly distributed, and resource densities between ports are the same. A base station may evaluate an uplink channel parameter based on the SRS. NR SRS port resources are orthogonal, frequency domain resources of each port are evenly distributed, and resource densities between ports are the same. The CSI-RS is used for CSI measurement and reporting of a channel state indicator (channel quality indicator, CQI), a channel rank indicator (rank indicator, RI), and a precoding matrix indicator (precoding matrix indicator, PMI). NR CSI-RS port resources are orthogonal, frequency domain resources of each port are evenly distributed, and resource densities between ports are the same. In conclusion, in the current protocol, reference signal port resources are orthogonal, frequency domain resources of each port are evenly distributed, and resource densities between ports are the same. However, for ultra-high-dimensional receive/transmit antenna ports and a large number of transmission streams, numbers of ports for the SRS, the CSI-RS, and the DMRS surge (for example, increase by 10 to 30 times). If the conventional even and dense RS design and CSI obtaining method in LTE and NR are still used, RS resource overheads are excessively large.

2. Feature of a first resource pattern or a second resource pattern of a reference signal

Currently, a first RS resource pattern used for data transmission and CSI collection is designed, to support a multi-antenna (multiple-input multiple-output, MIMO) technology based on ultra-high-dimensional receive/transmit antenna ports and ultra-wide bandwidth. Based on the design, RS resource overheads can be significantly reduced while achieving good performance. The first RS resource pattern (namely, the first resource pattern of the reference signal) or a second RS resource pattern (namely, the second resource pattern of the reference signal) is irregularly scattered across one or more of time domain, frequency domain, and spatial domain. For example, the RS is sent only through some transmit antenna ports, or each RS port occupies some resources in only frequency domain/time domain to send the RS. The first RS resource pattern or the second RS resource pattern may have different resource arrangement on different ports in frequency domain/time domain. This is conducive to reducing RS resource overheads.

For example, FIG. 2 is a diagram of a first resource pattern of a reference signal according to this application. Resources corresponding to a plurality of scattered points form the first resource pattern of the reference signal. In FIG. 2, a horizontal coordinate represents an antenna port, and a vertical coordinate represents a frequency domain resource. It can be seen that the first resource pattern of the reference signal is irregular. This irregularity makes it difficult for a resource pattern in the current protocol to correspond to the first resource pattern of the reference signal. Consequently, indication overheads of the resource pattern are large. For example, for the conventional design of the reference signal (for example, a DMRS, an SRS, or a CSI-RS), port resources are orthogonal, frequency domain resources of each port are evenly distributed and dense, and frequency domain resource densities between ports are the same. Therefore, resource patterns of the evenly distributed reference signals are also fixed. For example, for a DMRS, four patterns of the DMRS type 1 and type 2 are predefined in the protocol. A mapping relationship between a port index and a resource pattern is predefined in the protocol, and the resource pattern of the reference signal is indicated by indicating the port index. However, for an uneven resource pattern of the reference signal, a mapping relationship between a port index and the resource pattern cannot be predefined. Optionally, currently, the resource pattern of the reference signal may be indicated by a bitmap (bitmap). For example, 1 bit indicates whether each candidate resource of the reference signal is a resource of the reference signal. If a value of the bit is 0, it indicates that the candidate resource is not a resource of the reference signal. If the value of the bit is 1, it indicates that the candidate resource is a resource of the reference signal. However, this indication manner causes large indication overheads. For example, for an SRS, it is assumed that a bandwidth resource of the reference signal includes 16*12 subcarriers, a number of transmit antenna ports is 32, and a number of resource locations of the reference signal is 16. In this case, a total number of resources of the SRS is 32 * 16 * 12 = 6144 bits, and the indication overheads are large.

II. Communication method provided in this application

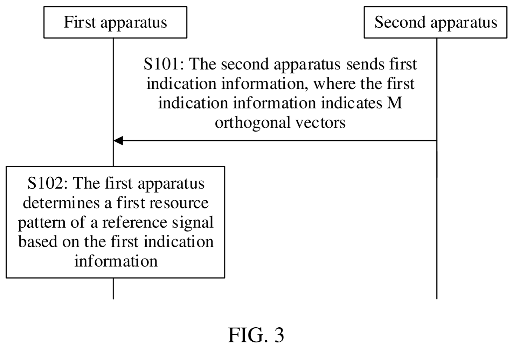

FIG. 3 is a schematic flowchart of a communication method according to this application. The communication method is applied to the communication system shown in FIG. 1. For example, the communication method may be implemented through interaction between a first apparatus and a second apparatus. The first apparatus may be a terminal or an apparatus capable of implementing functions of the terminal, and the second apparatus may be a network device or an apparatus capable of implementing functions of the network device. The communication method includes the following steps.

S101: The second apparatus sends first indication information, where the first indication information indicates M orthogonal vectors, and correspondingly, the first apparatus receives the first indication information.

That the first indication information indicates the M orthogonal vectors may be indicating indexes and/or dimensions of the M orthogonal vectors. For example, the first indication information including the indexes and/or the dimensions of the M orthogonal vectors may specifically be that the first indication information includes the indexes and the dimensions of the M orthogonal vectors, or the first indication information may include only the indexes of the M orthogonal vectors. The indexes of the M orthogonal vectors respectively indicate different orthogonal vectors. For example, the M orthogonal vectors respectively correspond to M indexes (for example, the orthogonal vectors one-to-one correspond to the indexes). The dimension of the orthogonal vector is a number of elements (or components) included in the orthogonal vector, that is, a length of the orthogonal vector. For example, the dimensions of the M orthogonal vectors may be represented as M values, and each value is n1 (for example, each orthogonal vector includes n1 elements (or components)). Optionally, the dimensions of the M orthogonal vectors may be the same or different. Optionally, the first indication information includes a first moment, and the first moment corresponds to the indexes and/or the dimensions of the M orthogonal vectors. For example, the first moment is a specified moment, and the first moment may be a specified moment before a current moment. The first moment corresponds to the indexes and/or the dimensions of the M orthogonal vectors (if the second apparatus determines the indexes and/or the dimensions of the M orthogonal vectors at the first moment, the first moment corresponds to the indexes and/or the dimensions of the M orthogonal vectors). When the first indication information includes the first moment, it is equivalent to that the first indication information indicates the M orthogonal vectors corresponding to the first moment. In conclusion, the second apparatus may predefine a plurality of candidate orthogonal vectors or a method for generating a plurality of candidate orthogonal vectors, so that the first indication information indicates the indexes of the M orthogonal vectors in the plurality of candidate orthogonal vectors.

In a possible implementation, the first indication information sent by the second apparatus may be one piece of indication information, and the indication information includes a plurality of indexes and/or dimensions. Alternatively, the second apparatus may send a plurality of pieces of first indication information, and each piece of first indication information includes one or more indexes and/or dimensions.

In a possible implementation, the first indication information may be configrued by RRC, or may be indicated by downlink control information (downlink control information, DCI) or a media access control element (MAC control element, MAC-CE). For example, it is assumed that the second apparatus is an O-CU-CP. In this case, the O-CU-CP may configure the first indication information based on the RRC. Alternatively, it is assumed that the second apparatus is an O-DU. In this case, the O-DU may indicate the first indication information to the terminal based on the MAC-CE. Alternatively, it is assumed that the second apparatus is an O-RU. In this case, the O-RU may indicate the first indication information to the terminal based on the DCI.

In a possible implementation, an update period of the first indication information is periodic, aperiodic, or semi-persistent. For example, if a reference signal is a periodic signal, the update period of the first indication information is periodic. If the reference signal is an aperiodic signal, the update period of the first indication information is aperiodic. If the reference signal is a semi-persistent signal, the update period of the first indication information is semi-persistent.

There is a mapping relationship between M orthogonal vectors and a first resource pattern of the reference signal. Specifically, the M orthogonal vectors belong to one or more orthogonal vector sets, a resource included in the first resource pattern of the reference signal belong to a candidate resource of the reference signal, and the one or more orthogonal vector sets correspond to the candidate resource of the reference signal. For example, a difference between one orthogonal vector set and a plurality of orthogonal vector sets lies in that one orthogonal vector set includes the M orthogonal vectors, and different orthogonal vectors in the M orthogonal vectors correspond to a same resource. For example, the M orthogonal vectors all correspond to a same resource. The plurality of orthogonal vector sets include the M orthogonal vectors, a plurality of orthogonal vectors in the M orthogonal vectors correspond to different resources, and orthogonal vectors corresponding to a same resource form one orthogonal vector set. For example, it is assumed that s1 orthogonal vectors in the M orthogonal vectors correspond to a same resource. In this case, the s1 orthogonal vectors form an orthogonal vector set m1. It is assumed that s2 orthogonal vectors in the M orthogonal vectors correspond to a same resource (which is different from the resource corresponding to the s1 orthogonal vectors). In this case, the s2 orthogonal vectors form another orthogonal vector set m2, where s1 + s2 ≤ M.

There is a mapping relationship between the M orthogonal vectors in the orthogonal vector set and the first resource pattern, of the reference signal, of the candidate resource of the reference signal. In a possible implementation, the mapping relationship may specifically include the following cases.

Case 1: The M orthogonal vectors belong to one orthogonal vector set, all orthogonal vectors in the orthogonal vector set correspond to a same candidate resource of the reference signal, the candidate resource of the reference signal includes resources in one or more domains, and the one or more domains includes one or more of time domain, frequency domain, and spatial domain. The candidate resource of the reference signal is a set of resources that can be used to send or receive the reference signal.

For example, it is assumed that the M orthogonal vectors (for example, an orthogonal vector 1 to an orthogonal vector M) belong to one orthogonal vector set, and the orthogonal vector set includes orthogonal vectors in a discrete Fourier transform DFT matrix, or a discrete cosine transform DCT matrix, or a Grassmannian Grassmannian manifold. In other words, the M orthogonal vectors are DFT vectors, or DCT vectors, or vectors in the Grassmannian manifold. The orthogonal vector set corresponds to the candidate resource (for example, resources in one or more of time domain, frequency domain, or spatial domain, where the resource is at a specific granularity) of the reference signal. For example, the orthogonal vector set corresponds to one or more of a candidate time domain resource, frequency domain resource, or spatial domain resource of the reference signal. The spatial domain resource includes one or more of a transmit antenna port, a receive antenna port, a horizontal antenna port, and a vertical antenna port. In other words, the orthogonal vector set corresponds to resources in different domains. A granularity of the time domain resource may be a radio frame (frame), a subframe (subframe), a slot (slot), a symbol (symbol), a mini-slot (mini-slot), a transmission time interval (transmission time interval, TTI), or the like. A granularity of the frequency domain resource may be a subcarrier, a resource block (resource block, RB), a resource block group (resource block group, RBG), a subband, a full band, or the like.

In a possible implementation, the resource included in the first resource pattern of the reference signal belongs to the candidate resource of the reference signal, in other words, the candidate resource of the reference signal includes the resource included in the first resource pattern of the reference signal, and there is a mapping relationship between a dimension of each of the M orthogonal vectors and a number of resources in the candidate resource of the reference signal. Specifically, the mapping relationship includes: If the candidate resource includes a resource in one domain, the dimension of each of the M orthogonal vectors is a number of resources in the resource in the domain; and if the candidate resource includes resources in a plurality of domains, the dimension of each of the M orthogonal vectors is a product of numbers of resources in the resources in the plurality of domains. For example, it is assumed that the candidate resource of the reference signal includes a frequency domain resource. In this case, the number of resources in the candidate resource of the reference signal is a number of resources in the frequency domain resource. It is assumed that the number of resources in the frequency domain resource of the reference signal is $x_1$. In this case, the dimension $n_1$ of each of the M orthogonal vectors is $n_1 = x_1$. For another example, it is assumed that the candidate resource of the reference signal includes a frequency domain resource and a spatial domain resource. In this case, the number of resources in the candidate resource of the reference signal is a product of a number of resources in the frequency domain resource and a number of resources in the spatial domain resource. It is assumed that the number of resources in the frequency domain resource of the reference signal is $x_1$, and the number of resources in the spatial domain resource is $x_2$. In this case, the dimension $n_1$ of each of the M orthogonal vectors is $n_1 = x_1 \times x_2$. Optionally, the mapping relationship further includes: If the candidate resource includes a resource in one domain, the dimension of each of the M orthogonal vectors is a multiple of a number of resources in the resource in the domain; and if the candidate resource includes resources in a plurality of domains, the dimension of each of the M orthogonal vectors is a multiple of a product of numbers of resources in the resources in the plurality of domains. For example, the dimension $n_1$ of each of the M orthogonal vectors is $n_1 = Ax_1$, where A indicates a multiple.

Case 2: The M orthogonal vectors belong to a plurality of orthogonal vector sets, all orthogonal vectors included in each orthogonal vector set correspond to a same candidate resource of the reference signal, different orthogonal vector sets correspond to different candidate resources of the reference signal, the plurality of orthogonal vector sets correspond to resources included in a combination of different candidate resources of the reference signal, the candidate resource of the reference signal includes resources in one or more domains, and the one or more domains includes one or more of time domain, frequency domain, and spatial domain.

For example, it is assumed that the M orthogonal vectors (for example, an orthogonal vector 1 to an orthogonal vector M) belong to a plurality of orthogonal vector sets (which are assumed to be a first orthogonal vector set and a second orthogonal vector set), and each orthogonal vector set includes orthogonal vectors in a discrete Fourier transform DFT matrix, or a discrete cosine transform DCT matrix, or a Grassmannian Grassmannian manifold. A difference between the case 2 and the case 1 lies in that the plurality of orthogonal vector sets respectively correspond to the candidate resource (for example, resources in one or more of time domain, frequency domain, and spatial domain) of the reference signal. For example, each orthogonal vector set corresponds to one or more of a candidate time domain resource, frequency domain resource, or spatial domain resource of the reference signal, and different orthogonal vector sets correspond to resources in different domains. A combination of parts of the candidate resources of the reference signal that correspond to the plurality of orthogonal vector sets corresponds to the entire candidate resource of the reference signal. For example, the first orthogonal vector set corresponds to the candidate time domain resource of the reference signal, and the second orthogonal vector set corresponds to a combination of the candidate frequency domain resource and spatial domain resource of the reference signal. In this case, the first orthogonal vector set and the second orthogonal vector set correspond to resources in different domains. A combination of the candidate time domain resource, of the reference signal, corresponding to the first orthogonal vector set and the candidate frequency domain resource and spatial domain resource, of the reference signal, corresponding to the second orthogonal vector set corresponds to the entire candidate resource of the reference signal.

In a possible implementation, resources included in a combination of candidate resources of the reference signal that correspond to the plurality of orthogonal vector sets include the first resource pattern of the reference signal. There is a mapping relationship between a dimension of each orthogonal vector in any one of the plurality of orthogonal vector sets and a number of resources in a candidate resource corresponding to the orthogonal vector set. The mapping relationship includes: If the candidate resource corresponding to the any orthogonal vector set includes a resource in one domain, the dimension of each orthogonal vector in the orthogonal vector set is a number of resources in the resource in the domain; and if the candidate resource corresponding to the any orthogonal vector set includes resources in a plurality of domains, the dimension of each orthogonal vector in the orthogonal vector set is a product of numbers of resources in the resources in the plurality of domains. For example, it is assumed that the first orthogonal vector set corresponds to a time domain resource of the reference signal, and a number of resources in the time domain resource is $x_1$. In this case, a dimension $n_1$ of each orthogonal vector in the first orthogonal vector set is $n_1 = x_1$. It is assumed that the candidate resource, of the reference signal, corresponding to the second orthogonal vector set includes a frequency domain resource and a spatial domain resource. In this case, the number of resources in the candidate resource of the reference signal is a product of a number of resources in the frequency domain resource and a number of resources in the spatial domain resource. It is assumed that the number of resources in the frequency domain resource of the reference signal is $x_2$, and the number of resources in the spatial domain resource is $x_3$. In this case, a dimension $n_2$ of each orthogonal vector in the second orthogonal vector set is $n_2 = x_2 \times x_3$. Optionally, the mapping relationship further includes: If the candidate resource corresponding to the any orthogonal vector set includes a resource in one domain, the dimension of each orthogonal vector in the orthogonal vector set is a multiple of a number of resources in the resource in the domain; and if the candidate resource corresponding to the any orthogonal vector set includes resources in a plurality of domains, the dimension of each orthogonal vector in the orthogonal vector set is a multiple of a product of numbers of resources in the resources in the plurality of domains. For example, the dimension $n_2$ of each orthogonal vector in the second orthogonal vector set is $n_2 = B(x_2 \times x_3)$, where $B$ indicates a multiple.

S102: The first apparatus determines the first resource pattern of the reference signal based on the first indication information.

There is a mapping relationship between the M orthogonal vectors and the first resource pattern of the reference signal. The first apparatus may determine the first resource pattern of the reference signal based on the M orthogonal vectors indicated by the first indication information. For example, in this application, a method for determining a first resource pattern of a reference signal based on one or more orthogonal vectors is predefined, and the determining method has different implementations in different cases.

1. In correspondence with the case 1 in S101, S102 includes the following implementations:

Implementation 1: The first resource pattern of the reference signal is a resource pattern formed by candidate resources corresponding to a group of linearly irrelevant row vectors of a first sub-unitary matrix. The first sub-unitary matrix is formed by arranging the M orthogonal vectors by column, and there is a one-to-one mapping relationship between the row vector of the first sub-unitary matrix and the candidate resource of the reference signal. In the implementation 1, that the second apparatus determines the first resource pattern of the reference signal based on the first indication information may specifically include the following procedure:

(1) The first apparatus arranges the M orthogonal vectors by column, to form the first sub-unitary matrix, and there is a one-to-one mapping relationship between the row vector of the first sub-unitary matrix and the candidate resource of the reference signal.

(2) The first apparatus selects a group of linearly irrelevant row vectors from the first sub-unitary matrix, and the resource pattern including the candidate resource corresponding to the group of linearly irrelevant row vectors is the first resource pattern of the reference signal.

The M orthogonal vectors indicated by the first indication information may be arranged by column, to form the first sub-unitary matrix $F_{n*s}$, where $n$ indicates dimensions of the orthogonal vectors, and $s$ indicates a number of indexes of the orthogonal vectors. Specifically, the M orthogonal vectors may be arranged by column in ascending or descending order of the indexes of the orthogonal vectors. For example, it is assumed that the indexes of the M orthogonal vectors are $X_1$ - $X_m$ (*M is a positive integer* greater than 1). If $X_1 < X_2 < \cdots < X_M$, the M orthogonal vectors may be arranged by column in ascending order $X_1$ - $X_M$ of the indexes of the orthogonal vectors, to form $F_{n*s}$. There is a one-to-one mapping relationship between the row vector of the first sub-unitary matrix and the candidate resource of the reference signal. The mapping relationship may be configured, or indicated, or predefined in a protocol. For example, it is assumed that the candidate resource of the reference signal includes spatial domain resources (for example, transmit antenna ports 0 to 3) and frequency domain resources 0 to 3. In this case, a manner of combining the candidate resources of the reference signal may be traversing the transmit antenna ports 0 to 3 and then traversing the frequency domain resources 0 to 3, to obtain combinations of candidate resources: (antenna port 0, frequency domain resource 0), (antenna port 1, frequency domain resource 0), (antenna port 2, frequency domain resource 0), (antenna port 3, frequency domain resource 0), (antenna port 0, frequency domain resource 1), (antenna port 1, frequency domain resource 1), (antenna port 2, frequency domain resource 1), (antenna port 3, frequency domain resource 1), (antenna port 0, frequency domain resource 2), (antenna port 1, frequency domain resource 2), (antenna port 2, frequency domain resource 2), (antenna port 3, frequency domain resource 2), (antenna port 0, frequency domain resource 3), (antenna port 1, frequency domain resource 3), (antenna port 2, frequency domain resource 3), and (antenna port 3, frequency domain resource 3). There is a one-to-one mapping relationship between the row vector of the first sub-unitary matrix and the candidate resource. In this example, each row vector of the first sub-unitary matrix may correspond to a combination of a spatial domain resource and a frequency domain resource. The mapping relationship may be pre-configured by the first apparatus (for example, it is preset that an index of each row vector corresponds to an index of one transmit antenna port and an index of one frequency domain resource), or may be indicated by the second apparatus to the first apparatus (for example, RRC configuration indicates that an index of each row vector corresponds to an index of one transmit antenna port and an index of one frequency domain resource), or may be predefined in a protocol (for example, it is predefined in a protocol that an index of each row vector corresponds to an index of one transmit antenna port and an index of one frequency domain resource). This is not limited in this application.

The first apparatus may select a group of linearly irrelevant row vectors from the first sub-unitary matrix $F_{n*s}$. It is assumed that the group of linearly irrelevant row vectors includes t linearly irrelevant rows. A value of t may be pre-configured by the first apparatus (for example, the value of t is predefined in a protocol), or may be indicated by the second apparatus to the first apparatus (for example, RRC configuration indicates the value of t). This is not limited in this application. There are a plurality of methods for the first apparatus to select t linearly irrelevant rows from the first sub-unitary matrix $F_{n*s}$, for example, QR factorization with column pivoting (QR factorization with column pivoting) and a machine learning method. For example, if the first apparatus selects the t linearly irrelevant rows from the first sub-unitary matrix $F_{n*s}$ by using the QR factorization method, QR factorization may be performed according to a formula (1):

$$F_{n*s}^{H} P_{t*n}^{T} = Q_{s*s} R_{s*t} \quad (1)$$

$F_{n*s}$ indicates the first sub-unitary matrix, $F_{n*s}^{H}$ indicates a conjugate transpose matrix of the first sub-unitary matrix, $P_{t*n}$ indicates a permutation matrix, a value in the permutation matrix is 0 or 1, a column index whose value is 1 corresponds to the t linearly irrelevant row vectors in the first sub-unitary matrix $F_{n*s}$, $P_{t*n}^{T}$ indicates a transpose matrix of the permutation matrix, $Q_{s*s}$ indicates an orthogonal matrix, $R_{s*t}$ indicates a triangular matrix, t indicates a number of linearly irrelevant row vectors, n indicates the dimensions of the orthogonal vectors, and s indicates the number of indexes of the orthogonal vectors. The column indexes of the elements with values being "1" in the permutation matrix $P_{t*n}$ indicate the t linearly irrelevant row vectors in the first sub-unitary matrix $F_{n*s}$, and the candidate resource, of the reference signal, corresponding to indexes of the t linearly irrelevant row vectors forms the first resource pattern of the reference signal.

Optionally, QR factorization with column pivoting may be implemented by using a Givens transformation method, a Householder transformation method, a Schemit orthogonalization method, or the like. This is not limited in this application. Optionally, a unique matrix $P_{t*n}$ may be obtained through QR factorization according to a predefined rule.

In a possible implementation, the predefined rule needs to meet the following condition: Rows included in the first sub-unitary matrix or a matrix obtained by performing linear transformation on the first sub-unitary matrix are arranged according to a rule of 2-norm of the rows (for example, in descending order of the 2-norm of the rows), and first t row indexes after arrangement are the column indexes corresponding to the elements with values being "1" in the matrix $P$.

In a possible implementation, the predefined rule needs to meet the following condition: Columns included in the first sub-unitary matrix or a matrix obtained by performing linear transformation on the first sub-unitary matrix are arranged according to a rule of 2-norm of the columns (for example, in descending order of the 2-norm of the columns), and first t columns indexes after arrangement are row indexes corresponding to the elements with values being "1" in the matrix $P$.

In a possible implementation, the predefined rule needs to meet the following condition: Modulus values of diagonal elements in $R_{s*t}$ are arranged in descending order.

In a possible implementation, the predefined rule needs to meet the following condition: A plurality of matrices $P_{t*n}$ are obtained through QR factorization, the plurality of matrices $P_{t*n}$ correspond to a plurality of matrices $R_{s*t}$, and a matrix $P$ corresponding to a matrix $R_{s*t}$ with a maximum sum of modulus values of diagonal elements in the matrices $R_{s*t}$ is selected. Optionally, when there are a plurality of $R$ matrices having a same sum of modulus values of diagonal elements, a matrix $P$ with a minimum sum of row indexes of elements with values being "1" in a plurality of $P$ matrices corresponding to the plurality of $R$ matrices is selected.

In a possible implementation, the predefined rule may meet one or more of the foregoing conditions.

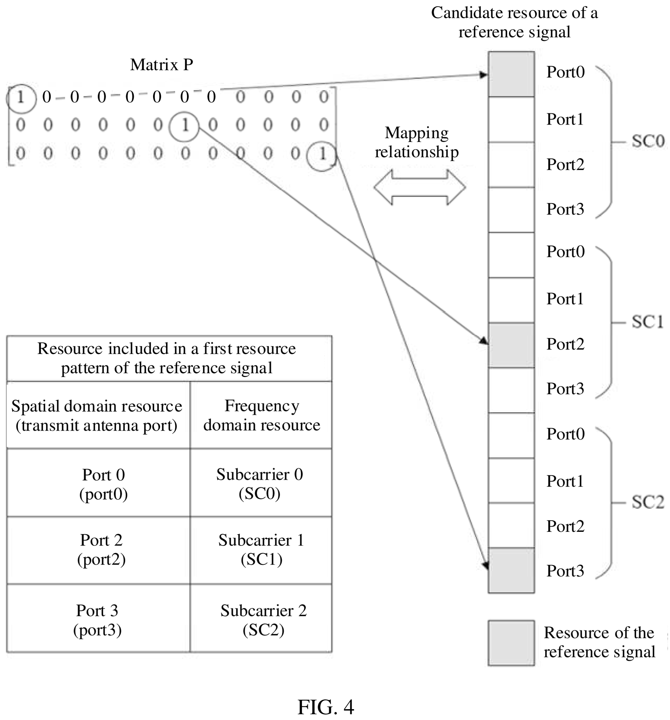

For example, FIG. 4 is a diagram of determining a first resource pattern of a reference signal based on a candidate resource corresponding to a group of linearly irrelevant row vectors according to this application. It is assumed that the number t of linearly irrelevant rows is 3, the dimensions n of the orthogonal vectors are 12, and the matrix P is shown in FIG. 4. It is assumed that the candidate resource of the reference signal includes a spatial domain resource and a frequency domain resource, for example, includes transmit antenna ports: port0 to port3, and frequency domain locations (for example, frequency domain subcarriers): SC0 to SC2, a manner of combining the candidate resources of the reference signal may be traversing the transmit antenna ports and then traversing the frequency domain resources. A combination of the transmit antenna ports and the frequency domain locations includes the following 12 groups of resources: (SC0, Port0), (SC0, Port1), (SC0, Port2), (SC0, Port3), (SC1, Port0), (SC1, Port1), (SC1, Port2), (SC1, Port3), (SC2, Port0), (SC2, Port1), (SC2, Port2), and (SC2, Port3). The candidate resource of the reference signal includes the 12 groups of resources, and there is a one-to-one mapping relationship between columns of the matrix P and the 12 groups of resources, as shown in FIG. 4. The first apparatus may determine, based on the matrix P, that column indexes whose value is 1 in the matrix are 1, 7, and 12. Because the columns of the matrix P one-to-one correspond to (SC0, Port0), (SC0, Port1), (SC0, Port2), (SC0, Port3), (SC1, Port0), (SC1, Port1), (SC1, Port2), (SC1, Port3), (SC2, Port0), (SC2, Port1), (SC2, Port2) and (SC2, Port3), the resource of the reference signal corresponds to resources in gray in FIG. 4, that is, (SC0, Port0), (SC1, Port2), and (SC2, Port3). The first resource pattern of the reference signal is shown in one column in FIG. 4.

Implementation 2: The first resource pattern of the reference signal is a resource pattern formed by candidate resources corresponding to a group of linearly irrelevant column vectors of a first sub-unitary matrix. The first sub-unitary matrix is formed by arranging the M orthogonal vectors by row, and there is a one-to-one mapping relationship between the column vector of the first sub-unitary matrix and the candidate resource of the reference signal. In the implementation 2, that the second apparatus determines the first resource pattern of the reference signal based on the first indication information may specifically include the following procedure:

(1) The first apparatus arranges the M orthogonal vectors by row, to form the first sub-unitary matrix, and there is a one-to-one mapping relationship between the column vector of the first sub-unitary matrix and the candidate resource of the reference signal.

(2) The first apparatus selects a group of linearly irrelevant column vectors from the first sub-unitary matrix, and a resource pattern formed by candidate resources corresponding to the group of linearly irrelevant column vectors is the first resource pattern of the reference signal.

For a specific procedure of the implementation 2, refer to corresponding descriptions in the implementation 1. The following mainly describes a difference between the implementation 2 and the implementation 1. In the implementation 2, the M orthogonal vectors indicated by the first indication information are arranged by row, to form the first sub-unitary matrix $F_{s*n}$, where s indicates a number of indexes of the orthogonal vectors, and n indicates dimensions of the orthogonal vectors. Similarly, the M orthogonal vectors may be arranged by row in ascending or descending order of the indexes of the orthogonal vectors, and there is a one-to-one mapping relationship between the column vector of the obtained first sub-unitary matrix and the candidate resource of the reference signal. A specific example is similar to the example in the implementation 1. For details, refer to the foregoing descriptions. Details are not described herein again.

The difference between the implementation 2 and the implementation 1 lies in that when the M orthogonal vectors are arranged by row, the first apparatus selects a group of linearly irrelevant column vectors from the first sub-unitary matrix $F_{s*n}$, and the group of linearly irrelevant column vectors includes t linearly irrelevant columns. There are a plurality of methods for the first apparatus to select t linearly irrelevant columns from the first sub-unitary matrix $F_{s*n}$, for example, QR factorization with column pivoting (QR factorization with column pivoting) and a machine learning method. For example, if the first apparatus selects the t linearly irrelevant columns from the first sub-unitary matrix $F_{s*n}$ by using the QR factorization method, QR factorization may be performed according to a formula (2):

$$F_{s*n}P_{n*t} = Q_{s*s}R_{s*t} \quad (2)$$

$F_{s*n}$ indicates the first sub-unitary matrix, $P_{b*t}$ indicates a permutation matrix, a value in the permutation matrix is 0 or 1, a row index whose value is 1 corresponds to the t linearly irrelevant column vectors in the first sub-unitary matrix $F_{s*n}$, $Q_{s*s}$ an orthogonal matrix, $R_{s*t}$ indicates a triangular matrix, t indicates a number of linearly irrelevant column vectors, n indicates the dimensions of the orthogonal vectors, and s indicates the number of indexes of the orthogonal vectors. For details about QR factorization and a predefined rule, refer to corresponding descriptions in the implementation 1. Details are not described herein again.

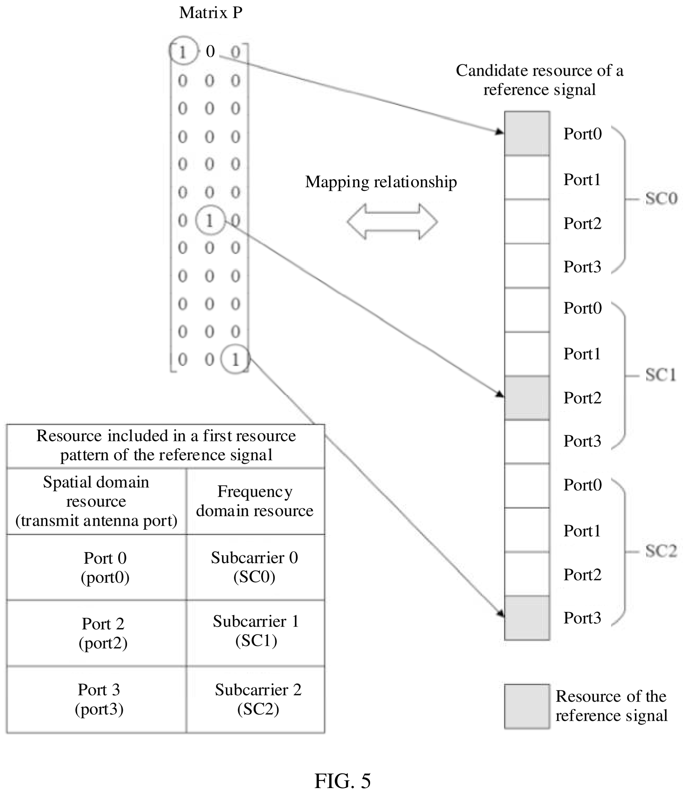

For example, FIG. 5 is a diagram of determining a first resource pattern of a reference signal based on a candidate resource corresponding to a group of linearly irrelevant column vectors according to this application. It is assumed that the number t of linearly irrelevant columns is 3, the dimensions n of the orthogonal vectors are 12, and the matrix P is shown in FIG. 5. Same assumption as that in FIG. 4 is made on the candidate resource of the reference signal, that is, the candidate resource of the reference signal includes 12 groups of resources, and there is a one-to-one mapping relationship between rows of the matrix P and the 12 groups of resources, as shown in FIG. 5. The first apparatus may determine, based on the matrix P, that row indexes whose value is 1 in the matrix P are 1, 7, and 12. Because the rows of the matrix P one-to-one correspond to (SC0, Port0), (SC0, Port1), (SC0, Port2), (SC0, Port3), (SC1, Port0), (SC1, Port1), (SC1, Port2), (SC1, Port3), (SC2, Port0), (SC2, Port1), (SC2, Port2) and (SC2, Port3), the resource of the reference signal corresponds to resources in gray in FIG. 5, that is, (SC0, Port0), (SC1, Port2), and (SC2, Port3). The first resource pattern of the reference signal is shown in one column in FIG. 5. In conclusion, the same first resource pattern of the reference signal may be obtained by using the implementation 1 or the implementation 2. After receiving the first indication information, the first apparatus may obtain the same first resource pattern of the reference signal even if different processing manners are used. Therefore, the first resource pattern is indicated by the orthogonal vectors, to reduce indication overheads.

2. In correspondence with the case 2 in S101, S102 includes the following implementations:

Implementation 3: The first resource pattern of the reference signal is a resource pattern formed by candidate resources corresponding to a group of linearly irrelevant row vectors of a second sub-unitary matrix. There is a one-to-one mapping relationship between the row vector of the second sub-unitary matrix and the resources included in the combination of the candidate resources of the reference signal that correspond to the plurality of orthogonal vector sets, and the second sub-unitary matrix is a Kronecker product of a plurality of first sub-unitary matrices. One first sub-unitary matrix is formed by arranging an orthogonal vector included in one orthogonal vector set by column, and there is a one-to-one mapping relationship between a row vector of the first sub-unitary matrix and a candidate resource, of the reference signal, corresponding to the orthogonal vector set. In the implementation 3, that the second apparatus determines the first resource pattern of the reference signal based on the first indication information may specifically include the following procedure:

(1) The first apparatus arranges, according to a predefined arrangement rule, the plurality of orthogonal vector sets to which the M orthogonal vectors belong, to separately form the plurality of first sub-unitary matrices by column, and there is a one-to-one mapping relationship between a row vector of a first sub-unitary matrix and a candidate resource, of the reference signal, corresponding to one orthogonal vector set.

(2) The first apparatus performs Kronecker product processing on the plurality of first sub-unitary matrices, to obtain one second sub-unitary matrix, and there is a one-to-one mapping relationship between a row vector of the second sub-unitary matrix and the resources included in the combination of the candidate resources of the reference signal that correspond to the plurality of orthogonal vector sets.

(3) The first apparatus selects a group of linearly irrelevant row vectors from the second sub-unitary matrix, and a resource pattern formed by candidate resources corresponding to the group of linearly irrelevant row vectors is the first resource pattern of the reference signal.

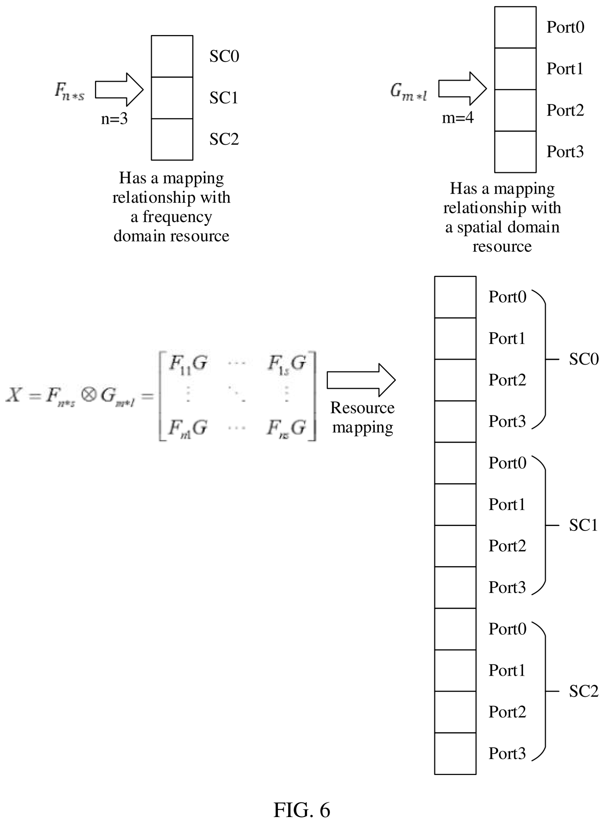

For a specific procedure of the implementation 3, refer to corresponding descriptions in the implementation 1. The following mainly describes a difference between the implementation 3 and the implementation 1. In the implementation 3, the M orthogonal vectors indicated by the first indication information belong to the plurality of orthogonal vector sets, and an orthogonal vector in each orthogonal vector set may be arranged by column, to form one first sub-unitary matrix. The plurality of orthogonal vector sets form the plurality of first sub-unitary matrices. There is a one-to-one mapping relationship between the row vector of each first sub-unitary matrix and the candidate resource, of the reference signal, corresponding to the corresponding orthogonal vector set. A specific example is similar to the example in the implementation 1. For details, refer to the foregoing descriptions. For example, it is assumed that the M orthogonal vectors belong to two orthogonal vector sets (for example, a first orthogonal vector set and a second orthogonal vector set), s orthogonal vectors in the first orthogonal vector set are arranged by column, to form one first sub-unitary matrix $F_{n*s}$, and $l$ orthogonal vectors in the second orthogonal vector set are arranged by column, to form the other first sub-unitary matrix $G_{m*l}$. It is assumed that $F_{n*s}$ corresponds to $n$ candidate frequency domain resources, and $G_{m*l}$ corresponds to $m$ candidate transmit antenna port resources. For example, a mapping relationship between the plurality of first sub-unitary matrices and the candidate resources of the reference signal is shown in FIG. 6. The mapping relationship in FIG. 6 may be pre-configured by the first apparatus, or may be indicated by the second apparatus to the first apparatus, or may be predefined in a protocol. For example descriptions, refer to corresponding descriptions in the implementation 1. For example, the matrix $F_{n*s}$ corresponds to $n=3$ candidate frequency domain resources: SC0, SC1, and SC2. A specific mapping relationship is shown in FIG. 6. The matrix $G_{m*l}$ corresponds to $m=4$ candidate transmit antenna port resources: Port0, Port1, Port2, and Port3. A specific mapping relationship is shown in FIG. 6.

A difference between the implementation 3 and the implementation 1 lies in that the first apparatus performs Kronecker product processing on the plurality of first sub-unitary matrices, to obtain one second sub-unitary matrix, and there is a one-to-one mapping relationship between the row vector of the second sub-unitary matrix and the resources included in the combination of the candidate resources of the reference signal that correspond to the plurality of orthogonal vector sets. For example, the first apparatus may perform Kronecker product processing on the matrix $F_{n*s}$ and the matrix $G_{m*l}$ according to a formula (3), to obtain one second sub-unitary matrix X.

$$X = F_{n*s} \otimes G_{m*l} = \begin{bmatrix} F_{11}G & \cdots & F_{1s}G \\ \vdots & \ddots & \vdots \\ F_{n1}G & \cdots & F_{ns}G \end{bmatrix} \quad (3)$$

$F_{n*s}$ includes $s$ orthogonal vectors and corresponds to n candidate frequency domain resources, $G_{m*l}$ includes $l$ orthogonal vectors and corresponds to $m$ candidate transmit antenna port resources, and $s + l = M$. For example, there is a one-to-one mapping relationship between a row vector of the second sub-unitary matrix $X$ and the resources included in the combination of the candidate resources of the reference signal that correspond to the plurality of orthogonal vector sets. In other words, there is a one-to-one mapping relationship between the second sub-unitary matrix $X$ and 12 groups of resources included in a combination of $n=3$ candidate frequency domain resources and $m=4$ candidate transmit antenna port resources, as shown in FIG. 6.

The implementation 3 is similar to the implementation 1. The first apparatus selects a group of linearly irrelevant row vectors from the second sub-unitary matrix X. It is assumed that the group of linearly irrelevant row vectors includes t linearly irrelevant rows. For example, the first apparatus may select the t linearly irrelevant rows from the second sub-unitary matrix $X$ by using the QR factorization method, and QR factorization is performed according to a formula (4):

$$(F_{n*s} \otimes G_{m*l})^H P_{t*(n*m)}^T = Q_{(s*l)*(s*l)} R_{(s*l)*t} \quad (4)$$

$F_{n*s} \otimes G_{m*l}$ indicates the second sub-unitary matrix, $(F_{n*s} \otimes G_{m*l})^H$ indicates a conjugate transpose matrix of the second sub-unitary matrix, $P_{t*(n*m)}$ indicates a permutation matrix (a value in the permutation matrix is 0 or 1, and a column index whose value is 1 corresponds to the t linearly irrelevant row vectors in the second sub-unitary matrix), $P_{t*(n*m)}^T$ indicates a transpose matrix of the permutation matrix, $Q_{(s*l)*(s*l)}$ indicates an orthogonal matrix, $R_{(s*l)*t}$ indicates a triangular matrix, s indicates a number of orthogonal vectors in the first orthogonal vector set, $n$ indicates a candidate frequency domain resource corresponding to the first orthogonal vector set, $l$ indicates a number of orthogonal vectors in the second orthogonal vector set, m indicates a candidate transmit antenna port resource corresponding to the second orthogonal vector set, and $s + l = M$. The column indexes of the elements "1" in the matrix $P_{t*(n*m)}$ indicate the t linearly irrelevant row vectors in the second sub-unitary matrix, and the candidate resource, of the reference signal, corresponding to indexes of the t linearly irrelevant row vectors forms the first resource pattern of the reference signal. For specific descriptions about QR factorization and a predefined rule, refer to corresponding descriptions in the implementation 1.

For example, the implementation 3 is similar to FIG. 4, the first apparatus may select t=3 linearly irrelevant row vectors from the second sub-unitary matrix, and the dimensions of the orthogonal vectors are n * m = 12. The matrix P is shown in FIG. 4. Based on the descriptions in FIG. 4, resources corresponding to column indexes whose values are 1 in the matrix P are resources of the reference signal, and the first resource pattern of the reference signal is shown in one column in FIG. 4.

Implementation 4: The first resource pattern of the reference signal is a resource pattern formed by candidate resources corresponding to a group of linearly irrelevant column vectors of a second sub-unitary matrix. There is a one-to-one mapping relationship between the column vector of the second sub-unitary matrix and the resources included in the combination of the candidate resources of the reference signal that correspond to the plurality of orthogonal vector sets, and the second sub-unitary matrix is a Kronecker product of a plurality of first sub-unitary matrices. One first sub-unitary matrix is formed by arranging an orthogonal vector included in one orthogonal vector set by row, and there is a one-to-one mapping relationship between a column vector of the first sub-unitary matrix and a candidate resource, of the reference signal, corresponding to the orthogonal vector set. In the implementation 4, that the second apparatus determines the first resource pattern of the reference signal based on the first indication information may specifically include the following procedure:

(1) The first apparatus arranges, according to a predefined arrangement rule, the plurality of orthogonal vector sets to which the M orthogonal vectors belong, to separately form the plurality of first sub-unitary matrices by row, and there is a one-to-one mapping relationship between a column vector of a first sub-unitary matrix and a candidate resource, of the reference signal, corresponding to one orthogonal vector set.
(2) The first apparatus performs Kronecker product processing on the plurality of first sub-unitary matrices, to obtain one second sub-unitary matrix, and there is a one-to-one mapping relationship between a column vector of the second sub-unitary matrix and the resources included in the combination of the candidate resources of the reference signal that correspond to the plurality of orthogonal vector sets.
(3) The first apparatus selects a group of linearly irrelevant column vectors from the second sub-unitary matrix, and a resource pattern formed by candidate resources corresponding to the group of linearly irrelevant column vectors is the first resource pattern of the reference signal.

For a specific procedure of the implementation 4, refer to corresponding descriptions in the implementation 2 and the implementation 3. The following mainly describes a difference between the implementation 4 and the implementation 2 and the implementation 3. In the implementation 4, the M orthogonal vectors indicated by the first indication information belong to the plurality of orthogonal vector sets, and an orthogonal vector in each orthogonal vector set may be arranged by row, to form one first sub-unitary matrix. The plurality of orthogonal vector sets form the plurality of first sub-unitary matrices. There is a one-to-one mapping relationship between the column vector of each first sub-unitary matrix and the candidate resource, of the reference signal, corresponding to the corresponding orthogonal vector set. A specific example is similar to the example in the implementation 2. For details, refer to the foregoing descriptions. For example, it is assumed that the M orthogonal vectors belong to two orthogonal vector sets (for example, a first orthogonal vector set and a second orthogonal vector set), orthogonal vectors in the first orthogonal vector set are arranged by row, to form one first sub-unitary matrix $F_{s*n}$, and orthogonal vectors in the second orthogonal vector set are arranged by column, to form the other first sub-unitary matrix $G_{l*m}$. It is assumed that $F_{s*n}$ corresponds to $n$ candidate frequency domain resources, and $G_{l*m}$ corresponds to $m$ candidate transmit antenna port resources. A specific mapping relationship is similar to that in FIG. 6.

A difference between the implementation 4 and the implementation 3 is that when the first apparatus performs Kronecker product processing on the plurality of first sub-unitary matrices to obtain the second sub-unitary matrix, subscripts of the matrices are different. For example, the first apparatus may perform Kronecker product processing on the matrix $F_{s*n}$ and the matrix $G_{l*m}$ according to a formula (5), to obtain one second sub-unitary matrix X'.

$$X' = F_{s*n} \otimes G_{l*m} = \begin{bmatrix} F_{11}G & \cdots & F_{s1}G \\ \vdots & \ddots & \vdots \\ F_{1n}G & \cdots & F_{sn}G \end{bmatrix} \quad (5)$$

$F_{s*n}$ includes $s$ orthogonal vectors and corresponds to n candidate frequency domain resources, $G_{l*m}$ includes $l$ orthogonal vectors and corresponds to $m$ candidate transmit antenna port resources, and $s + l$ = M. For example, there is a one-to-one mapping relationship between a row vector of the second sub-unitary matrix $X'$ and the resources included in the combination of the candidate resources of the reference signal that correspond to the plurality of orthogonal vector sets. In other words, there is a one-to-one mapping relationship between the second sub-unitary matrix $X'$ and 12 groups of resources included in a combination of $n$=3 candidate frequency domain resources and $m$=4 candidate transmit antenna port resources. A specific mapping relationship is similar to that in FIG. 6.

The implementation 4 is similar to the implementation 2. The first apparatus selects a group of linearly irrelevant column vectors from the second sub-unitary matrix $X'$. It is assumed that the group of linearly irrelevant column vectors includes t linearly irrelevant columns. For example, the first apparatus may select the t linearly irrelevant columns from the second sub-unitary matrix $X'$ by using the QR factorization method, and QR factorization is performed according to a formula (6):

$$(F_{s*n} \otimes G_{l*m})P_{(n*m)*t} = Q_{(s*l)*(s*l)}R_{(s*l)*t} \quad (6)$$

$F_{s*n} \otimes G_{m*l}$ indicates the second sub-unitary matrix, $P_{(n*m)*t}$ indicates a permutation matrix (a value in the permutation matrix is 0 or 1, and a row index whose value is 1 corresponds to the t linearly irrelevant column vectors in the second sub-unitary matrix), $Q_{(s*l)*(s*l)}$ indicates an orthogonal matrix, $R_{(s*l)*t}$ indicates a triangular matrix, $s$ indicates a number of orthogonal vectors in the first orthogonal vector set, $n$ indicates a candidate frequency domain resource corresponding to the first orthogonal vector set, $l$ indicates a number of orthogonal vectors in the second orthogonal vector set, $m$ indicates a candidate transmit antenna port resource corresponding to the second orthogonal vector set, and $s + l =$ M. The row indexes of the elements "1" in the matrix $P_{(n*m)*t}$ indicates the t linearly irrelevant column vectors in the second sub-unitary matrix, and the candidate resource, of the reference signal, corresponding to indexes of the t linearly irrelevant column vectors forms the first resource pattern of the reference signal. For specific descriptions about QR factorization and a predefined rule, refer to corresponding descriptions in the implementation 1.

For example, the implementation 4 is similar to FIG. 5, the first apparatus may select t=3 linearly irrelevant column vectors from the second sub-unitary matrix, and the dimensions of the orthogonal vectors are n * m = 12. The matrix P is shown in FIG. 5. Based on the descriptions in FIG. 5, resources corresponding to row indexes whose values are 1 in the matrix P are resources of the reference signal, and the first resource pattern of the reference signal is shown in one column in FIG. 5.

In a possible implementation, the methods for determining the first resource pattern of the reference signal based on the indicated one or more orthogonal vectors in the implementation 1 to the implementation 4 may be separately performed. For example, the implementation 1 to the implementation 4 may not be embedded in the method procedure shown in FIG. 3, and may be directly performed. For example, when the first apparatus and the second apparatus know the first indication information (or know the one or more orthogonal vectors), the resource pattern of the reference signal may be directly determined based on the method shown in the implementation 1 to the implementation 4.

In this embodiment, the first apparatus may receive the first indication information, where the first indication information may indicate the M orthogonal vectors, and there is a mapping relationship between the M orthogonal vectors and the first resource pattern of the reference signal. In other words, the first apparatus may derive the first resource pattern of the reference signal based on the M orthogonal vectors indicated by the first indication information. Compared with a direct indication of the resource pattern of the reference signal, the indication of the M orthogonal vectors can significantly reduce indication overheads.

III. The following describes in detail specific procedures in which the communication method in this application is applied to different scenarios.

An example in which a reference signal is a CSI-RS, an SRS, or a DMRS is used. The following describes the communication method in this application in detail by using the following examples. A first apparatus may be a terminal or an apparatus capable of implementing functions of the terminal, and a second apparatus may be a network device or an apparatus capable of implementing functions of the network device.

Example 1: The second apparatus sends first indication information, and the first apparatus determines a resource pattern of the CSI-RS after receiving the first indication information.

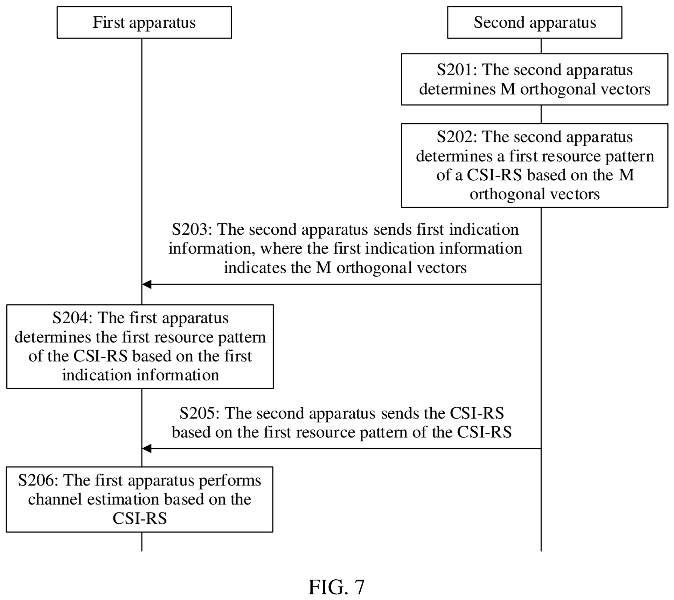

For example, FIG. 7 is a schematic flowchart of determining a resource pattern of a CSI-RS according to this application. The following steps are included.

S201: A second apparatus determines M orthogonal vectors.

In a possible implementation, it is assumed that a plurality of candidate orthogonal vectors are predefined or a method for generating a plurality of candidate orthogonal vectors is predefined. The second apparatus may select the M orthogonal vectors from the plurality of candidate orthogonal vectors based on a channel characteristic. For example, dimensions of the plurality of candidate orthogonal vectors may be different, and the plurality of candidate orthogonal vectors may belong to a same DFT matrix, or DCT matrix, or Grassmannian Grassmannian manifold, or may belong to different DFT matrices, or DCT matrices, or Grassmannian Grassmannian manifolds. Different DFT matrices, or DCT matrices, or Grassmannian Grassmannian manifolds mean that orthogonal vectors in the DFT matrices, or DCT matrices, or Grassmannian Grassmannian manifolds have different dimensions. The M orthogonal vectors are main M basis vectors that form a channel space.

S202: The second apparatus determines a first resource pattern of a CSI-RS based on the M orthogonal vectors.

For a specific implementation of S202, refer to corresponding descriptions in S102. Details are not described herein again.

S203: The second apparatus sends first indication information, where the first indication information indicates M orthogonal vectors, and correspondingly, the first apparatus receives the first indication information.

S204: The first apparatus determines the first resource pattern of the CSI-RS based on the first indication information.

For specific implementations of S203 and S204, refer to corresponding descriptions in S101 and S102. Details are not described herein again.

S205: The second apparatus sends the CSI-RS based on the first resource pattern of the CSI-RS, and correspondingly, the first apparatus receives the CSI-RS based on the first resource pattern of the CSI-RS.

S206: The first apparatus performs channel estimation based on the CSI-RS. For a specific channel estimation method, refer to descriptions in an existing protocol standard. This is not limited in this application.

In the example 1, the second apparatus determines and sends the M orthogonal vectors, and indicates the resource pattern of the reference signal based on the M orthogonal vectors. This helps reduce indication overheads of the reference signal. In addition, the first apparatus may determine the first resource pattern of the CSI-RS based on the M orthogonal vectors. This helps accurately receive the CSI-RS and perform channel estimation.

Example 2: The second apparatus determines first indication information, the first apparatus determines and sends second indication information, and the first apparatus and the second apparatus separately determine resource patterns of the CSI-RS.

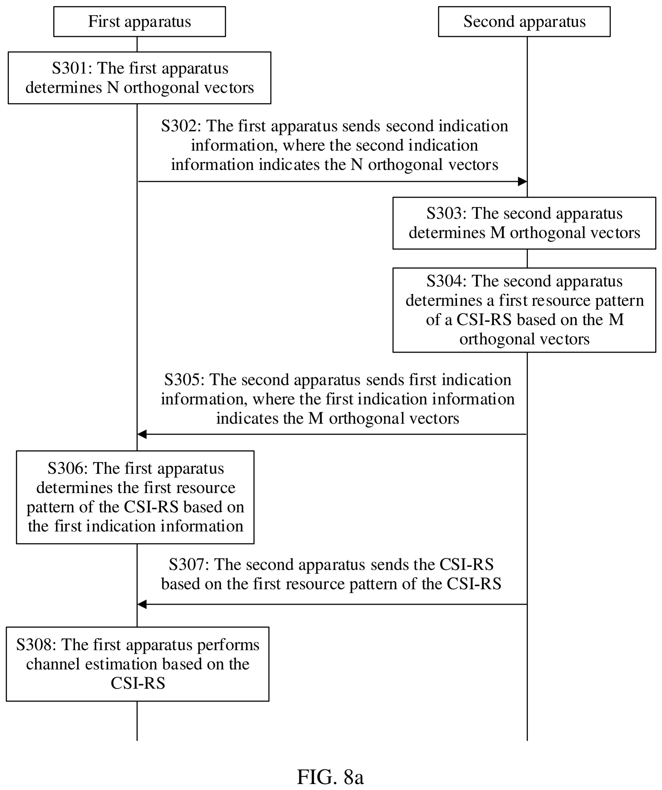

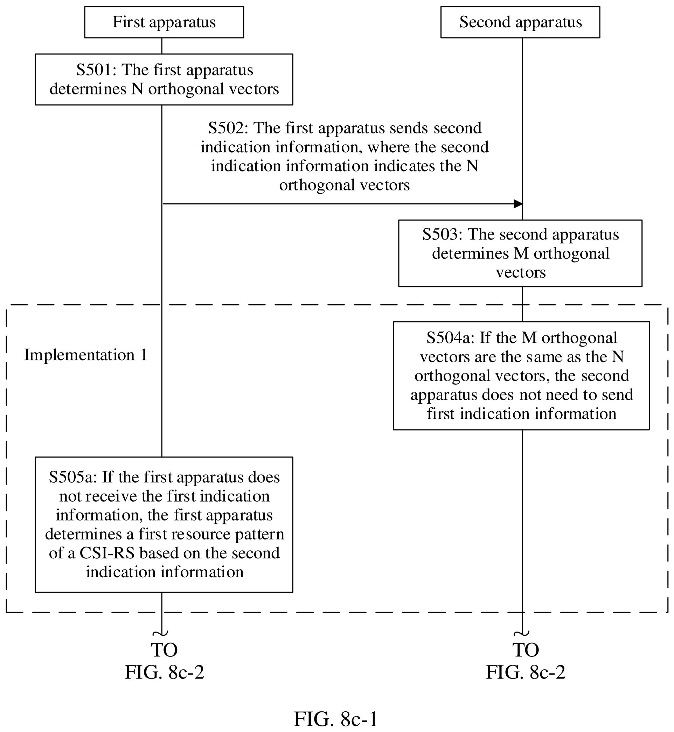

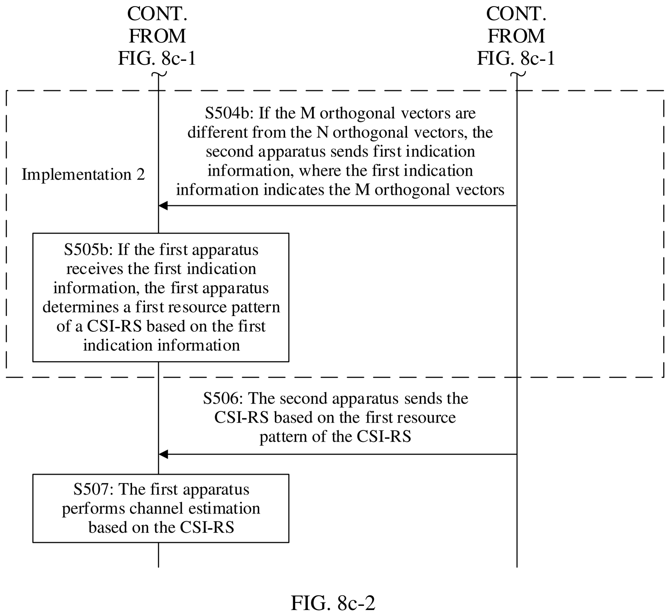

For example, FIG. 8a is another schematic flowchart of determining a resource pattern of a CSI-RS according to this application. The following steps are included.

S301: A first apparatus determines N orthogonal vectors.

There is a mapping relationship between the N orthogonal vectors and a second resource pattern of the reference signal. Specifically, similar to M orthogonal vectors, the N orthogonal vectors determined by the first apparatus belong to one or more orthogonal vector sets, and a resource included in the second resource pattern of the reference signal belong to a candidate resource of the reference signal. The one or more orthogonal vector sets correspond to the candidate resource of the reference signal, and there is a mapping relationship between the N orthogonal vectors in the orthogonal vector set and the second resource pattern, of the reference signal, of the candidate resource of the reference signal. In a possible implementation, the mapping relationship may specifically include the following cases:

Case 1: The N orthogonal vectors belong to one orthogonal vector set, all orthogonal vectors in the orthogonal vector set correspond to a same candidate resource of the reference signal, and the candidate resource of the reference signal includes resources in one or more of time domain, frequency domain, and spatial domain.

Case 2: The N orthogonal vectors belong to a plurality of orthogonal vector sets, all orthogonal vectors included in each orthogonal vector set correspond to a same candidate resource of the reference signal, different orthogonal vector sets correspond to different candidate resources of the reference signal, the plurality of orthogonal vector sets correspond to resources included in a combination of a plurality of candidate resources of the reference signal, and the candidate resource of the reference signal includes resources in one or more of time domain, frequency domain, and spatial domain.

For specific implementations of the case 1 and the case 2, refer to descriptions of the case 1 and the case 2 in S 101. Details are not described herein again.

S302: The first apparatus sends second indication information, where the second indication information indicates the N orthogonal vectors, and correspondingly, a second apparatus receives the second indication information.

That the second indication information indicates the N orthogonal vectors may be indicating indexes and/or dimensions of the N orthogonal vectors. For example, the second indication information including the indexes and/or the dimensions of the N orthogonal vectors may specifically be that the second indication information includes the indexes and the dimensions of the N orthogonal vectors, or the second indication information may include only the indexes of the N orthogonal vectors. The indexes of the N orthogonal vectors respectively indicate different orthogonal vectors. For example, the N orthogonal vectors respectively correspond to N indexes (for example, the orthogonal vectors one-to-one correspond to the indexes). The dimensions of the N orthogonal vectors are also referred to as lengths of the N orthogonal vectors. For example, the lengths of the N orthogonal vectors each are represented as n2. Optionally, the second indication information includes a second moment, and the second moment corresponds to indexes and/or dimensions of the N orthogonal vectors. For example, the second moment is a specified moment, and the second moment may be a specified moment before a current moment. The second moment corresponds to the indexes and/or the dimensions of the N orthogonal vectors (if the first apparatus determines the indexes and/or the dimensions of the N orthogonal vectors at the second moment, the second moment corresponds to the indexes and/or the dimensions of the N orthogonal vectors). When the second indication information includes the second moment, it is equivalent to that the second indication information indicates the N orthogonal vectors corresponding to the second moment. In conclusion, the first apparatus may predefine a plurality of candidate orthogonal vectors or a method for generating a plurality of candidate orthogonal vectors, so that the second indication information indicates the indexes of the N orthogonal vectors in the plurality of candidate orthogonal vectors.

In a possible implementation, the second indication information sent by the first apparatus may be one piece of indication information, and the indication information includes a plurality of indexes and/or dimensions. Alternatively, the first apparatus may send a plurality of pieces of second indication information, and each piece of second indication information includes one or more indexes and/or dimensions.

In a possible implementation, the second indication information may be configured by RRC, or may be indicated by uplink control information (uplink control information, UCI) or a media access control element (MAC control element, MAC-CE).

S303: The second apparatus determines M orthogonal vectors.

In a possible implementation, the second apparatus may determine the M orthogonal vectors based on a channel characteristic, and then determine a resource pattern of the reference signal based on the M orthogonal vectors. Specifically, the second apparatus may determine indexes and/or dimensions of the M orthogonal vectors, and then determine the resource pattern of the reference signal based on the indexes and/or the dimensions of the M orthogonal vectors. For a specific implementation, refer to corresponding descriptions in S102.

In a possible implementation, the second apparatus may determine the M orthogonal vectors based on the N orthogonal vectors. In this case, the N orthogonal vectors determined by the first apparatus are the same as the M orthogonal vectors (N=M).

In a possible implementation, the second apparatus may determine M' orthogonal vectors based on the channel characteristic, and then determine the M orthogonal vectors based on the N orthogonal vectors. The M orthogonal vectors may include some orthogonal vectors in the M' orthogonal vectors or the N orthogonal vectors, but are not all the same as the M' orthogonal vectors or the N orthogonal vectors.

In a possible implementation, for the second apparatus determining the resource pattern of the reference signal based on the M orthogonal vectors, refer to corresponding descriptions in S101 and S102. For example, it is assumed that the second apparatus presets indexes of a plurality of orthogonal vectors, and selects indexes of the M orthogonal vectors from the indexes based on the channel characteristic. The M orthogonal vectors are main M basis vectors that form a channel space.

S304: The second apparatus determines a first resource pattern of the CSI-RS based on the M orthogonal vectors.

S305: The second apparatus sends first indication information, where the first indication information indicates the M orthogonal vectors, and correspondingly, the first apparatus receives the first indication information.

S306: The first apparatus determines the first resource pattern of the CSI-RS based on the first indication information.

For a specific implementation of S306, refer to corresponding descriptions in S102. For example, the first apparatus arranges the M orthogonal vectors by column, to form a first sub-unitary matrix, and there is a one-to-one mapping relationship between a row vector of the first sub-unitary matrix and the candidate resource of the reference signal. The first apparatus selects a group of linearly irrelevant row vectors from the first sub-unitary matrix, and a resource pattern formed by candidate resources corresponding to the group of linearly irrelevant row vectors is the first resource pattern of the CSI-RS. A specific procedure is not described herein.

In the procedure: S305 and S306 shown in FIG. 8a, the second apparatus sends the first indication information to the first apparatus, where the M orthogonal vectors indicated by the first indication information may be the same as or different from the N orthogonal vectors determined by the first apparatus. However, the second apparatus may send the first indication information to the first apparatus, to indicate the M orthogonal vectors, so that both the first apparatus and the second apparatus determine the first resource pattern of the CSI-RS based on the M orthogonal vectors.

S307: The second apparatus sends the CSI-RS based on the first resource pattern of the CSI-RS, and correspondingly, the first apparatus receives the CSI-RS based on the first resource pattern of the CSI-RS.

S308: The first apparatus performs channel estimation based on the CSI-RS. For a specific channel estimation method, refer to descriptions in an existing protocol standard. This is not limited in this application.

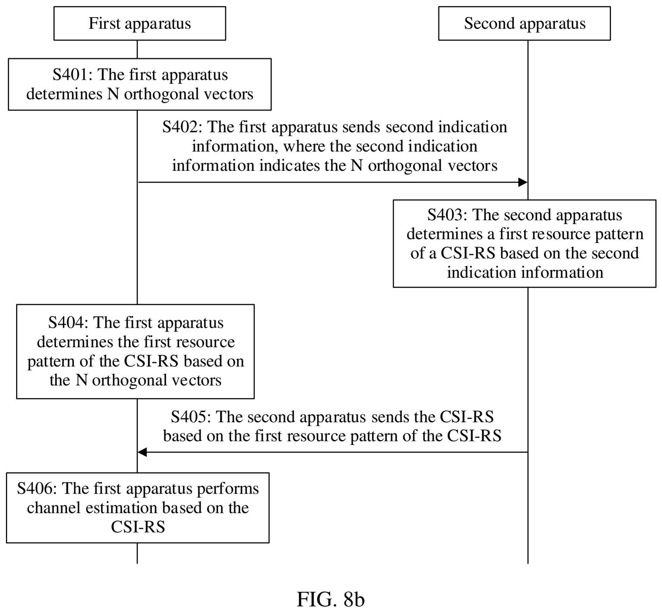

For another example, FIG. 8b is still another schematic flowchart of determining a resource pattern of a CSI-RS according to this application. The following steps are included.

S401: A first apparatus determines N orthogonal vectors.

S402: The first apparatus sends second indication information, where the second indication information indicates the N orthogonal vectors, and correspondingly, a second apparatus receives the second indication information.

For specific implementations of S401 and S402, refer to corresponding descriptions in S301 and S302. Details are not described herein again.

S403: The second apparatus determines a first resource pattern of a CSI-RS based on the second indication information.

The second apparatus may directly determine the first resource pattern of the CSI-RS based on the N orthogonal vectors indicated by the second indication information.

S404: The first apparatus determines the first resource pattern of the CSI-RS based on the N orthogonal vectors.

For a specific implementation of S404, refer to corresponding descriptions in S102. Details are not described herein again.

S405: The second apparatus sends the CSI-RS based on the first resource pattern of the CSI-RS, and correspondingly, the first apparatus receives the CSI-RS based on the first resource pattern of the CSI-RS.

S406: The first apparatus performs channel estimation based on the CSI-RS. For a specific channel estimation method, refer to descriptions in an existing protocol standard. This is not limited in this application.

For another example, FIG. 8c-1 and FIG. 8c-2 are yet another schematic flowchart of determining a resource pattern of a CSI-RS according to this application. The following steps are included.

S501: A first apparatus determines N orthogonal vectors.

S502: The first apparatus sends second indication information, where the second indication information indicates the N orthogonal vectors, and correspondingly, a second apparatus receives the second indication information.

S503: The second apparatus determines M orthogonal vectors.

For specific implementations of S501 to S503, refer to corresponding descriptions in S301 to S303. Details are not described herein again.

S504a: If the M orthogonal vectors are the same as the N orthogonal vectors, the second apparatus does not need to send first indication information.

In a possible implementation, the M orthogonal vectors are the same as the N orthogonal vectors. For example, indexes and dimensions of the M orthogonal vectors are the same as indexes and dimensions of the N orthogonal vectors; or indexes of the M orthogonal vectors are the same as indexes of the N orthogonal vectors. Therefore, the first apparatus has determined the N orthogonal vectors that are the same as the M orthogonal vectors, and a second resource pattern, of a reference signal, corresponding to the N orthogonal vectors is the same as a first resource pattern, of the reference signal, corresponding to the M orthogonal vectors. In this case, the second apparatus does not need to send the first indication information to the first apparatus.

S504b: If the M orthogonal vectors are different from the N orthogonal vectors, the second apparatus sends the first indication information, where the first indication information indicates the M orthogonal vectors, and correspondingly, the first apparatus receives the first indication information.

In a possible implementation, the M orthogonal vectors are different from the N orthogonal vectors. For example, indexes and dimensions of the M orthogonal vectors are different from indexes and dimensions of the N orthogonal vectors; or indexes of the M orthogonal vectors are different from indexes of the N orthogonal vectors; or dimensions of the M orthogonal vectors are different from dimensions of the N orthogonal vectors. Therefore, a second resource pattern, of a reference signal, corresponding to the N orthogonal vectors is different from a first resource pattern, of the reference signal, corresponding to the M orthogonal vectors. In this case, the second apparatus needs to send the first indication information to the first apparatus, to indicate the first resource pattern for sending the reference signal.

In a possible implementation, that the second apparatus sends the first indication information may be specifically directly sending the first indication information, or sending a first moment, where the first moment corresponds to indexes and/or dimensions of the M orthogonal vectors. For example, the first moment is a moment before the second apparatus sends the first indication information. At the first moment, the first apparatus may record the corresponding M orthogonal vectors. Optionally, the second apparatus may pre-indicate, based on RRC configuration, that the first apparatus needs to record, for a time period, indexes and/or dimensions of orthogonal vectors and a resource pattern, of the reference signal, corresponding to the orthogonal vectors. Optionally, after recording the indexes and/or the dimensions of the orthogonal vectors and the resource pattern, of the reference signal, corresponding to the orthogonal vectors, the first apparatus may send one or more orthogonal vectors corresponding to the first moment to the second apparatus. The second apparatus determines, based on an orthogonal vector corresponding to a current moment, that the orthogonal vector corresponding to the current moment is the same as the orthogonal vector corresponding to the first moment. In this case, the second apparatus may send the indexes and/or the dimensions of the orthogonal vectors corresponding to the first moment to the first apparatus, so that the first apparatus determines the first resource pattern of the reference signal based on the indexes and/or the dimensions of the orthogonal vectors corresponding to the first moment.

S505a: If the first apparatus does not receive the first indication information, the first apparatus determines the first resource pattern of the CSI-RS based on the second indication information.

For example, the first apparatus does not receive the first indication information in a time period after sending the second indication information. The first apparatus may determine that the N orthogonal vectors are the same as the M orthogonal vectors determined by the second apparatus. In this case, the resource pattern, of the reference signal, corresponding to the N orthogonal vectors is the same as the resource pattern, of the reference signal, corresponding to the M orthogonal vectors. The first apparatus may determine the resource pattern, of the reference signal, corresponding to the N orthogonal vectors as the first resource pattern of the CSI-RS.

For a specific implementation in which the first apparatus determines the first resource pattern of the CSI-RS based on the second indication information, refer to corresponding descriptions in S102. For example, the first apparatus arranges the M orthogonal vectors by column, to form a first sub-unitary matrix, and there is a one-to-one mapping relationship between a row vector of the first sub-unitary matrix and a candidate resource of the reference signal. The first apparatus selects a group of linearly irrelevant row vectors from the first sub-unitary matrix, and a resource pattern formed by candidate resources corresponding to the group of linearly irrelevant row vectors is the first resource pattern of the CSI-RS. A specific procedure is not described herein.

S505b: If the first apparatus receives the first indication information, the first apparatus determines the first resource pattern of the CSI-RS based on the first indication information.

For a specific implementation in which the first apparatus determines the first resource pattern of the CSI-RS based on the first indication information, refer to corresponding descriptions in S102. Details are not described herein again.

Optionally, S504a and S505a and S504b and S505b are steps in different implementations, and steps in one implementation are performed based on a different situation.

S506: The second apparatus sends the CSI-RS based on the first resource pattern of the CSI-RS, and correspondingly, the first apparatus receives the CSI-RS based on the first resource pattern of the CSI-RS.

S507: The first apparatus performs channel estimation based on the CSI-RS. For a specific channel estimation method, refer to descriptions in an existing protocol standard. This is not limited in this application.

In the example 2, the first apparatus may determine the N orthogonal vectors. If the N orthogonal vectors are the same as the M orthogonal vectors determined by the second apparatus, the second apparatus does not need to indicate the orthogonal vectors to the first apparatus. This may further reduce indication overheads of the reference signal.

Example 3: The second apparatus determines and sends first indication information based on the reference signal SRS, and the first apparatus determines a resource pattern of the SRS after receiving the first indication information.

For example, FIG. 9 is a schematic flowchart of determining a resource pattern of an SRS according to this application. The following steps are included.

S601: A second apparatus determines M orthogonal vectors.

S602: The second apparatus determines a first resource pattern of an SRS based on the M orthogonal vectors.

For specific implementations of S601 and S602, refer to corresponding descriptions in S201 and S202. Details are not described herein again.

S603: The second apparatus sends first indication information, where the first indication information indicates the M orthogonal vectors, and correspondingly, a first apparatus receives the first indication information.

S604: The first apparatus determines the first resource pattern of the SRS based on the first indication information.

For specific implementations of S603 and S604, refer to corresponding descriptions in S101 and S102. Details are not described herein again.

S605: The first apparatus sends the SRS based on the first resource pattern of the SRS, and correspondingly, the second apparatus receives the SRS based on the first resource pattern of the SRS.

S606: The second apparatus performs channel estimation based on the SRS.

For specific implementations of S605 and S606, refer to corresponding descriptions in S205 and S206. Details are not described herein again.

In the example 3, a specific implementation and beneficial effect are similar to those in the example 1, to help reduce indication overheads of the reference signal. A difference lies in that the reference signal in the example 3 is an SRS.

Example 4: The second apparatus determines and sends first indication information based on the reference signal DMRS, and the first apparatus determines a resource pattern of the DMRS after receiving the first indication information.

For example, FIG. 10 is a schematic flowchart of determining a resource pattern of a DMRS according to this application. The following steps are included.

S701: A second apparatus determines M orthogonal vectors.

S702: The second apparatus determines a first resource pattern of a DMRS based on the M orthogonal vectors.

For specific implementations of S701 and S702, refer to corresponding descriptions in S201 and S202. Details are not described herein again.

S703: The second apparatus sends first indication information, where the first indication information indicates the M orthogonal vectors, and correspondingly, a first apparatus receives the first indication information.

S704: The first apparatus determines the first resource pattern of the DMRS based on the first indication information.

For specific implementations of S703 and S704, refer to corresponding descriptions in S101 and S102. Details are not described herein again.

S705: The second apparatus sends the DMRS based on the first resource pattern of the DMRS, and correspondingly, the first apparatus receives the DMRS based on the first resource pattern of the DMRS.

S706: The first apparatus performs channel estimation based on the DMRS.

For specific implementations of S705 and S706, refer to corresponding descriptions in S205 and S206. Details are not described herein again.

In the example 4, a specific implementation and beneficial effect are similar to those in the example 1, to help reduce indication overheads of the reference signal. A difference lies in that the reference signal in the example 4 is a DMRS.

IV. A resource pattern of a reference signal is indicated on a bandwidth part.

In this application, it is assumed that a bandwidth part (bandwidth part, BWP) may be further divided into one or more bandwidth resources, and third indication information is defined, to indicate the one or more bandwidth resources. The one or more bandwidth resources are associated with a first resource pattern. For example, the one or more bandwidth resources are a minimum frequency domain granularity corresponding to a resource pattern of a reference signal. The one or more bandwidth resources are consecutive bandwidth resources in the BWP. For example, the third indication information is indicated by the second apparatus to the first apparatus, so that the second apparatus can indicate the resource pattern of the reference signal to the first apparatus by using fewer indication overheads.

In a possible implementation, the plurality of bandwidth resources include a first bandwidth resource and a second bandwidth resource, and a resource pattern corresponding to the second bandwidth resource is the same as a resource pattern corresponding to the first bandwidth resource; or first indication information corresponding to the second bandwidth resource is the same as first indication information corresponding to the first bandwidth resource; or one or more orthogonal vectors corresponding to the second bandwidth resource are the same as one or more orthogonal vectors corresponding to the first bandwidth resource. For example, FIG. 11 is a diagram in which a plurality of bandwidth resources correspond to a same resource pattern according to this application. In FIG. 11, a bandwidth resource 1 may be considered as the first bandwidth resource, and a bandwidth resource 2 may be considered as the second bandwidth resource. The bandwidth resource 1 and the bandwidth resource 2 may correspond to a same resource pattern (for example, both correspond to the first resource pattern of the reference signal). Optionally, it may be considered that the bandwidth resource 1 and the bandwidth resource 2 correspond to same first indication information, or the bandwidth resource 1 and the bandwidth resource 2 correspond to same M orthogonal vectors.

In a possible implementation, the plurality of bandwidth resources include a first bandwidth resource and a second bandwidth resource, and a resource pattern corresponding to the second bandwidth resource is different from a resource pattern corresponding to the first bandwidth resource; or first indication information corresponding to the second bandwidth resource is different from first indication information corresponding to the first bandwidth resource; or one or more orthogonal vectors corresponding to the second bandwidth resource are different from one or more orthogonal vectors corresponding to the first bandwidth resource. For example, FIG. 12 is a diagram in which a plurality of bandwidth resources correspond to different resource patterns according to this application. In FIG. 12, a bandwidth resource 1 may be considered as the first bandwidth resource, and a bandwidth resource 2 may be considered as the second bandwidth resource. The bandwidth resource 1 and the bandwidth resource 2 may correspond to different resource patterns (for example, the bandwidth resource 1 corresponds to the first resource pattern of the reference signal, and the bandwidth resource 2 corresponds to a third resource pattern of the reference signal, where the first resource pattern is different from the third resource pattern). Optionally, it may be considered that the bandwidth resource 1 and the bandwidth resource 2 correspond to different first indication information, or the bandwidth resource 1 and the bandwidth resource 2 correspond to different orthogonal vectors.

In a possible implementation, the resource pattern of the reference signal may be obtained by combining resource patterns corresponding to bandwidth resources indicated by a plurality of pieces of third indication information. As shown in FIG. 11 and FIG. 12, resource patterns corresponding to different bandwidth resources may be the same or may be different. In this implementation, the resource pattern of the reference signal is a resource pattern obtained by combining resource patterns corresponding to the bandwidth resources 1 and 2.

In a possible implementation, it is assumed that the BWP may be divided into $N_{\text{UnitBWP}}$ bandwidth resources, and one or more bandwidth resources indicated by the third indication information belong to $N_{\text{UnitBWP}}$ the bandwidth resources. For example, indexes of the $N_{\text{UnitBWP}}$ bandwidth resources are #1,#2, . . .,#$N_{\text{UnitBWP}}$. The $N_{\text{UnitBWP}}$ bandwidth resources include the first bandwidth resource and the second bandwidth resource described in the foregoing embodiments.

In a possible implementation, a relationship between a resource pattern, of the reference signal, corresponding to the one or more bandwidth resources indicated by the third indication information and the resource pattern, of the reference signal, indicated by the first indication information is as follows:

Relationship 1: A resource pattern, of the reference signal, corresponding to one bandwidth resource indicated by the third indication information is the resource pattern, of the reference signal, indicated by the first indication information. Relationship 2: Resource patterns, of the reference signal, separately corresponding to a plurality of bandwidth resources indicated by the third indication information each are the resource pattern, of the reference signal, indicated by the first indication information. For example, the bandwidth resources 1 and 2 shown in FIG. 11 are the plurality of bandwidth resources, and correspond to a same resource pattern of the reference signal (the resource pattern, of the reference signal, indicated by the first indication information).

Optionally, if there are a plurality of pieces of first indication information (the plurality of pieces of first indication information indicate different resource patterns of the reference signal), a plurality of pieces of third indication information are needed, to indicate corresponding bandwidth resources.

In a possible implementation, a relationship between a resource pattern, of the reference signal, corresponding to the one or more bandwidth resources indicated by the third indication information and the resource pattern, of the reference signal, indicated by the first indication information is as follows: If a plurality of bandwidth resources indicated by one piece of third indication information separately correspond to different resource patterns of the reference signal, different resource patterns, of the reference signal, corresponding to the plurality of bandwidth resources indicated by the third indication information correspond to resource patterns, of the reference signal, indicated by different first indication information. For example, the bandwidth resources 1 and 2 shown in FIG. 12 are the plurality of bandwidth resources, and the bandwidth resources 1 and 2 may be the plurality of bandwidth resources indicated by one piece of third indication information. The bandwidth resource 1 and the bandwidth resource 2 correspond to different resource patterns of the reference signal, and the bandwidth resource 1 and the bandwidth resource 2 correspond to resource patterns, of the reference signal, indicated by different first indication information.

In a possible implementation, a value of $N_{UnitBWP}$ may be obtained according to a formula (7). For example, a number $N_{UnitBWP}$ of bandwidth resources included in the BWP is shown in the formula (7):

$$N_{\text{UnitBWP}} = \left\lceil \left( N_{\text{BWP},i}^{size} + \left( N_{\text{BWP},i}^{start} \bmod P \right) \right) / P \right\rceil \quad (7)$$

$N_{\text{BWP},i}^{size}$ indicates a size of an i$^{th}$ BWP configured by the second apparatus for the first apparatus, $N_{\text{BWP},i}^{start}$ indicates an index of a start RB (that is, one column of frequency domain resource units) of an i$^{th}$ bandwidth resource, P indicates a size of a bandwidth resource, and may be represented by a number of RBs included in the BWP, P is a positive integer, mod indicates a modulo operation, and $\lceil \rceil$ indicates a rounding-up operation.

Optionally, a size of an initial bandwidth resource and a size of a last bandwidth resource in the BWP are affected by a start location and an end location of bandwidth resources, and may not be P. For example, in the i$^{th}$ BWP, a size of an initial bandwidth resource is represented as $\text{UnitBWP}_0^{size}$, and $\text{UnitBWP}_0^{size}$ meets a formula (8):

$$\text{UnitBWP}_0^{size} = P - N_{\text{BWP},i}^{start} \bmod P \quad (8)$$

When $\left( N_{\text{BWP},i}^{start} + N_{\text{BWP},i}^{size} \right) \bmod P > 0$, a size of a last bandwidth resource is represented as $\text{UnitBWP}_{last}^{size}$, and $\text{UnitBWP}_{last}^{size}$ meets a formula (9):

$$\text{UnitBWP}_{last}^{size} = \frac{N_{\text{BWP},i}^{start} + N_{\text{BWP},i}^{size}}{P} \quad (9)$$

When $\left( N_{\text{BWP},i}^{start} + N_{\text{BWP},i}^{size} \right) \bmod P = 0$, the size of the last bandwidth resource is P.

In a possible implementation, fourth indication information is further defined in this application, and indicates one or more bandwidth resources, and the one or more bandwidth resources are associated with the second resource pattern. For example, the one or more bandwidth resources are a minimum frequency domain granularity corresponding to the resource pattern of the reference signal. The one or more bandwidth resources are consecutive bandwidth resources in the BWP. The first apparatus determines the second resource pattern as a resource pattern, of the reference signal, corresponding to the N orthogonal vectors. For example, the fourth indication information is indicated by the first apparatus to the second apparatus, so that the first apparatus can indicate the resource pattern of the reference signal to the second apparatus by using fewer indication overheads.

For example, the plurality of bandwidth resources include a third bandwidth resource and a fourth bandwidth resource, and a resource pattern corresponding to the fourth bandwidth resource is the same as a resource pattern corresponding to the third bandwidth resource; or second indication information corresponding to the fourth bandwidth resource is the same as second indication information corresponding to the third bandwidth resource; or one or more orthogonal vectors corresponding to the fourth bandwidth resource are the same as one or more orthogonal vectors corresponding to the third bandwidth resource. For another example, a resource pattern corresponding to the fourth bandwidth resource is different from a resource pattern corresponding to the third bandwidth resource; or second indication information corresponding to the fourth bandwidth resource is different from second indication information corresponding to the third bandwidth resource; or one or more orthogonal vectors corresponding to the fourth bandwidth resource are different from one or more orthogonal vectors corresponding to the third bandwidth resource. For specific implementations of the two examples, refer to corresponding descriptions in FIG. 11 and FIG. 12. A difference lies in that the third bandwidth resource and the fourth bandwidth resource are associated with the second indication information or the N orthogonal vectors corresponding to the second indication information.

In a possible implementation, the third indication information and the fourth indication information may be further applied to the procedures shown in FIG. 3 and FIG. 7 to FIG. 10. For example, when the third indication information is applied to the procedure shown in FIG. 3, the second apparatus may simultaneously send the first indication information and the third indication information, or may send the third indication information after sending the first indication information. Correspondingly, the first apparatus receives the third indication information, where the third indication information indicates one or more bandwidth resources, and the one or more bandwidth resources are associated with the first resource pattern. For another example, when the third indication information and the fourth indication information are applied to the procedures shown in FIG. 8a to FIG. 8c-1 and FIG. 8c-2, the first apparatus may simultaneously send the second indication information and the fourth indication information, or may send the fourth indication information after sending the second indication information. Correspondingly, the second apparatus receives the fourth indication information, where the fourth indication information indicates one or more bandwidth resources, and the one or more bandwidth resources are associated with the second resource pattern. If the M orthogonal vectors are different from the N orthogonal vectors, the second apparatus may simultaneously send the first indication information and the third indication information, or may send the third indication information after sending the first indication information. Correspondingly, the first apparatus receives the third indication information, where the third indication information indicates one or more bandwidth resources, and the one or more bandwidth resources are associated with the first resource pattern.

In this embodiment, it is assumed that the BWP is further divided into one or more bandwidth resources, and the plurality of bandwidth resources may correspond to a same resource pattern. This may further reduce indication overheads of the resource pattern of the reference signal.

V. The following analyzes performance of the communication method provided in this application.

For example, Table 2 is a schematic table of indication overheads of an indication manner using a bitmap or an indication manner using first indication information. In Table 2, for example, the reference signal is an SRS. It is assumed that the RS indicates that bandwidth is 16*12 subcarriers, a number of transmit antenna ports is 32, and a number of RS locations is 16.

Table 2: Schematic table of indication overheads of an indication manner using a bitmap or an indication manner using first indication information

| Indication manner Method | Length of an orthogonal vector Length of orthogonal vector(n) | Number of orthogonal vectors Number of orthogonal vectors(s) | Indication overhead Indication overhead | |
|---|---|---|---|---|
| First indication information (indicating an index of an orthogonal vector) Indicate orthogonal vector indexes | A number of subcarriers is 192 (Number of subcarriers = 192) A number of transmit antenna ports is 32 (Number of Tx ports(UE) = 32) | A number of orthogonal vectors for frequency domain is 4 (Number of orthogonal vectors for frequency domain = 4) A number of orthogonal vectors for spatial domain is 4 (Number of orthogonal vectors for spatial domain = 4) | 4 * 8 bits + 4 * 5 bits = 52 bits | 1X |
| Bitmap bitmap | | | 32 * 16 * 12 = 6144 bits | 118X |

It can be seen that, in comparison with the indication manner using a bitmap, in this application, the M orthogonal vectors are indicated, to significantly reduce indication overheads (reduce by 118 times).

For another example, Table 3 is another schematic table of indication overheads of an indication manner using a bitmap or an indication manner using first indication information. In Table 3, for example, the reference signal is a CSI-RS. It is assumed that the RS indicates that bandwidth is 16*12 subcarriers, a number of transmit antenna ports is 1024, and a number of RS locations is 16.

Table 3: Another schematic table of indication overheads of an indication manner using a bitmap or an indication manner using first indication information

| Indication manner Method | Length of an orthogonal vector Length of orthogonal vector(n) | Number of orthogonal vectors Number of orthogonal vectors(s) | Indication overhead Indication overhead | |
|---|---|---|---|---|
| First indication information (indicating an index of an orthogonal vector) Indicate orthogonal vector indexes | A number of subcarriers is 192 (Number of subcarriers = 192) A number of transmit antenna ports is 1024 (Number of Tx ports(UE) = 1024) | A number of orthogonal vectors for frequency domain is 4 (Number of orthogonal vectors for frequency domain = 4) A number of orthogonal vectors for spatial domain is 4 (Number of orthogonal vectors for spatial domain = 4) | 4 * 8 bits + 4 * 10 bits = 72 bits | |
| | A number of subcarriers is 192 (Number of subcarriers = 192) A number of transmit antenna ports is 1024 (Number of Tx ports(UE) = 1024) Spatial domain may be further divided into 32 * 16 * 2 = 1024 | A number of orthogonal vectors for frequency domain is 4 (Number of orthogonal vectors for frequency domain = 4) A number of orthogonal vectors for horizontal antenna ports in spatial domain is 2 (Number of orthogonal vectors for horizontal antenna ports in spatial domain = 2) A number of orthogonal vectors for vertical antenna ports in spatial domain is 2 (Number of orthogonal vectors for vertical antenna ports in spatial domain = 2) | 4 * 8 bits + 2 * 5 bits + 2 * 4 bits = 50 bits | 1X |
| Indication manner Method | Length of an orthogonal vector Length of orthogonal vector(n) | Number of orthogonal vectors Number of orthogonal vectors(s) | Indication overhead Indication overhead | |
| Bitmap bitmap | | | 1024 * 16 * 12 = 196608 bits | 3932X |

A difference between Table 3 and Table 2 lies in that spatial domain in Table 3 may be further divided into 32 * 16 * 2 = 1024, for example, divided into the horizontal antenna ports in spatial domain and the vertical antenna ports in spatial domain, and it is assumed that a same pattern is used for two polarization dimensions (same pattern for two polarization dimensions). It can be seen that, in comparison with the indication manner using a bitmap, in this application, when a number of antennas is large, the M orthogonal vectors are indicated, to more significantly reduce indication overheads (reduce by 3932 times). In addition, when spatial domain is divided, indication overheads can also be reduced.

To implement functions in the method provided in this application, an apparatus or a device provided in this application may include a hardware structure and/or a software module. This implements the functions in a form of the hardware structure, the software module, or a combination of the hardware structure and the software module. Whether a function in the foregoing functions is performed in a form of the hardware structure, the software module, or both the hardware structure and the software module depends on a specific application and a design constraint condition of the technical solutions. Division into modules in this application is an example, and is merely logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

FIG. 13 is a diagram of a communication apparatus according to this application. The apparatus may include a module that one-to-one corresponds to the method/operation/step/action described in any one of the embodiments shown in FIG. 3 to FIG. 12. The module may be a hardware circuit, or may be software, or may be implemented by a hardware circuit in combination with software.

The apparatus 1300 includes a communication unit 1301 and a processing unit 1302, configured to implement the method performed by each device in the foregoing embodiments. The communication unit 1301 is also referred to as a transceiver unit. The transceiver unit includes a sending unit and a receiving unit. The sending unit is configured to send a signal, and the receiving unit is configured to receive a signal.

In a possible implementation, the apparatus is a terminal, or is located in a terminal. Specifically, the communication unit 1301 is configured to receive first indication information, where the first indication information indicates M orthogonal vectors, and there is a mapping relationship between the M orthogonal vectors and a first resource pattern of a reference signal. The processing unit 1302 is configured to determine the first resource pattern of the reference signal based on the first indication information.

For specific execution procedures of the communication unit 1301 and the processing unit 1302 in this implementation, refer to the descriptions of the steps performed by the terminal in the foregoing method embodiments and related descriptions. Details are not described herein again. In the communication method implemented by the apparatus, a plurality of candidate orthogonal vectors or a method for generating a plurality of candidate orthogonal vectors may be predefined. In this case, the first indication information indicates the M orthogonal vectors in the plurality of candidate orthogonal vectors. Compared with a direct indication of the RS resource pattern, the indication of the M orthogonal vectors can significantly reduce indication overheads.

In a possible implementation, the apparatus is a network device, or is located in a network device. Specifically, the processing unit 1302 is configured to determine first indication information, where the first indication information indicates M orthogonal vectors, and there is a mapping relationship between the M orthogonal vectors and a first resource pattern of a reference signal. The communication unit 1301 is configured to send the first indication information.

For specific execution procedures of the communication unit 1301 and the processing unit 1302 in this implementation, refer to the descriptions of the steps performed by the network device in the foregoing method embodiments and related descriptions. Details are not described herein again. In the communication method implemented by the apparatus, the resource pattern of the reference signal may be flexibly indicated by changing one or more orthogonal vectors indicated by the first indication information. Compared with a direct indication of the RS resource pattern, the indication of the M orthogonal vectors can significantly reduce indication overheads of the reference signal.

In a possible implementation, the apparatus is a terminal, or is located in a terminal. Specifically, the communication unit 1301 is configured to send second indication information, where the second indication information indicates N orthogonal vectors, and there is a mapping relationship between the N orthogonal vectors and a second resource pattern of the reference signal. The processing unit 1302 is configured to determine a first resource pattern of the reference signal based on the second indication information, where the first resource pattern is the same as the second resource pattern.

For specific execution procedures of the communication unit 1301 and the processing unit 1302 in this implementation, refer to the descriptions of the steps performed by the terminal in the foregoing method embodiments and related descriptions. Details are not described herein again. In the communication method implemented by the apparatus, the terminal may determine the N orthogonal vectors, where there is also a mapping relationship between the N orthogonal vectors and the resource pattern of the reference signal. In addition, when the second resource pattern is the same as the first resource pattern, of the reference signal, determined by the second apparatus, the terminal does not need to receive the indication information, and may directly determine the first resource pattern of the reference signal based on the second indication information, to further reduce indication overheads of the reference signal.

In a possible implementation, when the communication apparatus is a chip, the chip includes a transceiver unit and a processing unit. The transceiver unit may be an input/output circuit or a communication interface. The processing unit is a processor, a microprocessor, an integrated circuit, or a logic circuit integrated on the chip.

This application further provides a communication apparatus. FIG. 14 is a diagram of another structure of a communication apparatus according to an embodiment of this application. The communication apparatus may be configured to perform the steps performed by the first apparatus or the second apparatus in embodiments shown in FIG. 3 to FIG. 12. For details, refer to the related descriptions in the foregoing method embodiments.

The communication apparatus includes a processor 1401. Optionally, the communication apparatus further includes a memory 1402 and a transceiver 1403.

In a possible implementation, the processor 1401, the memory 1402, and the transceiver 1403 are connected to each other through a bus, and the memory stores computer instructions.

Optionally, the processing unit in the foregoing embodiment may specifically be the processor 1401 in this embodiment. Therefore, a specific implementation of the processor 1401 is not described again. The communication unit in the foregoing embodiment may be specifically the transceiver 1403 in this embodiment. Therefore, a specific implementation of the transceiver 1403 is not described again.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

In this application, the memory may be a non-volatile memory, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

This application provides another communication apparatus. The device includes a processor and an interface. Optionally, the communication apparatus further includes a memory. The processor is coupled to the memory. The processor is configured to read and execute computer instructions stored in the memory, to implement the communication method in embodiments shown in FIG. 3 to FIG. 12.

An embodiment of this application further provides a communication system. The communication system includes a first apparatus and a second apparatus. The first communication apparatus is configured to perform all or some of the steps performed by the first apparatus in the foregoing embodiments. The second apparatus is configured to perform all or some of the steps performed by the second apparatus in the foregoing embodiments.

This application provides a computer-readable storage medium. The computer-readable storage medium stores a program or instructions. When the program or the instructions are run on a computer, the computer is enabled to perform the communication method in embodiments shown in FIG. 3 to FIG. 12.

This application provides a computer program product. The computer program product includes instructions. When the instructions are run on a computer, the computer is enabled to perform the communication method in embodiments shown in FIG. 3 to FIG. 12.

This application provides a chip or a chip system. The chip or the chip system includes at least one processor and an interface. The interface and the at least one processor are interconnected through a line. The at least one processor is configured to run a computer program or instructions, to perform the communication method in embodiments shown in FIG. 3 to FIG. 12.

The interface in the chip may be an input/output interface, a pin, a circuit, or the like.

The chip system may be a system on chip (system on chip, SOC), a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or some of the technical solutions provided in this application may be implemented by using software, hardware, firmware, or any combination thereof. When software is used to implement the technical solutions, all or a part of the technical solutions may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, mutual reference can be made between embodiments. For example, mutual reference can be made between methods and/or terms in method embodiments, mutual reference can be made between functions and/or terms in apparatus embodiments, and mutual reference can be made between functions and/or terms in the apparatus embodiments and the method embodiments.

It is clear that a person skilled in the art can make various modifications and variations to this application without departing from the scope of this application. This application is intended to cover the modifications and variations of this application, provided that they fall within the scope of the following claims and equivalent technologies of this application.

**Claims**

1. A communication method, comprising:

   receiving first indication information, wherein the first indication information indicates M orthogonal vectors, there is a mapping relationship between the M orthogonal vectors and a first resource pattern of a reference signal, and M is a positive integer; and
   determining the first resource pattern of the reference signal based on the first indication information.

2. The method according to claim 1, wherein the first indication information comprises indexes and/or dimensions of the M orthogonal vectors; or
   the first indication information comprises a first moment, and the first moment corresponds to indexes and/or dimensions of the M orthogonal vectors.

3. The method according to claim 1 or 2, wherein the M orthogonal vectors belong to one orthogonal vector set, all orthogonal vectors in the orthogonal vector set correspond to a same candidate resource of the reference signal, the candidate resource comprises resources in one or more domains, and the one or more domains comprises one or more of time domain, frequency domain, and spatial domain.

4. The method according to claim 3, wherein a resource comprised in the first resource pattern of the reference signal belongs to the candidate resource, and there is a mapping relationship between a dimension of each of the M orthogonal vectors and a number of resources in the candidate resource of the reference signal.

5. The method according to claim 4, wherein that there is the mapping relationship between the dimension of each of the M orthogonal vectors and the number of resources in the candidate resource of the reference signal comprises:

   if the candidate resource comprises a resource in one domain, the dimension of each of the M orthogonal vectors is a number of resources in the resource in the domain; and
   if the candidate resource comprises resources in a plurality of domains, the dimension of each of the M orthogonal vectors is a product of numbers of resources in the resources in the plurality of domains.

6. The method according to any one of claims 3 to 5, wherein that there is the mapping relationship between the M orthogonal vectors and the first resource pattern of the reference signal comprises:

   the first resource pattern of the reference signal is a resource pattern formed by candidate resources corresponding to a group of linearly irrelevant row vectors of a first sub-unitary matrix, wherein
   the first sub-unitary matrix is formed by arranging the M orthogonal vectors by column, and there is a one-to-one mapping relationship between the row vector of the first sub-unitary matrix and the candidate resource of the reference signal; or
   the first resource pattern of the reference signal is a resource pattern formed by candidate resources corresponding to a group of linearly irrelevant column vectors of a first sub-unitary matrix, wherein
   the first sub-unitary matrix is formed by arranging the M orthogonal vectors by row, and there is a one-to-one mapping relationship between the column vector of the first sub-unitary matrix and the candidate resource of the reference signal.

7. The method according to claim 1 or 2, wherein the M orthogonal vectors belong to a plurality of orthogonal vector sets, all orthogonal vectors comprised in each orthogonal vector set correspond to a same candidate resource of the reference signal, different orthogonal vector sets correspond to different candidate resources of the reference signal, the plurality of orthogonal vector sets correspond to resources comprised in a combination of different candidate resources of the reference signal, the candidate resource comprises resources in one or more domains, and the one or more domains comprises one or more of time domain, frequency domain, and spatial domain.

8. The method according to claim 7, wherein a resource comprised in the first resource pattern of the reference signal belongs to the resources comprised in the combination of the plurality of candidate resources of the reference signal that correspond to the plurality of orthogonal vector sets, and there is a mapping relationship between a dimension of each orthogonal vector in any one of the plurality of orthogonal vector sets and a number of resources in a candidate resource corresponding to the orthogonal vector set.

9. The method according to claim 8, wherein that there is the mapping relationship between the dimension of each orthogonal vector in any one of the plurality of orthogonal vector sets and the number of resources in the candidate resource corresponding to the orthogonal vector set comprises:

if the candidate resource corresponding to the any orthogonal vector set comprises a resource in one domain, the dimension of each orthogonal vector in the orthogonal vector set is a number of resources in the resource in the domain; and
if the candidate resource corresponding to the any orthogonal vector set comprises resources in a plurality of domains, the dimension of each orthogonal vector in the orthogonal vector set is a product of numbers of resources in the resources in the plurality of domains.

10. The method according to any one of claims 7 to 9, wherein that there is the mapping relationship between the M orthogonal vectors and the first resource pattern of the reference signal comprises:

the first resource pattern of the reference signal is a resource pattern formed by candidate resources corresponding to a group of linearly irrelevant row vectors of a second sub-unitary matrix, wherein
there is a one-to-one mapping relationship between the row vector of the second sub-unitary matrix and the resources comprised in the combination of the candidate resources of the reference signal that correspond to the plurality of orthogonal vector sets, and the second sub-unitary matrix is a Kronecker product of a plurality of first sub-unitary matrices; and
a first sub-unitary matrix is formed by arranging an orthogonal vector comprised in one orthogonal vector set by column, and there is a one-to-one mapping relationship between a row vector of the first sub-unitary matrix and a candidate resource, of the reference signal, corresponding to the orthogonal vector set; or
the first resource pattern of the reference signal is a resource pattern formed by candidate resources corresponding to a group of linearly irrelevant column vectors of a second sub-unitary matrix, wherein
there is a one-to-one mapping relationship between the column vectors of the second sub-unitary matrix and the resources comprised in the combination of the candidate resources of the reference signal that correspond to the plurality of orthogonal vector sets, and the second sub-unitary matrix is a Kronecker product of a plurality of first sub-unitary matrices; and
a first sub-unitary matrix is formed by arranging an orthogonal vector comprised in one orthogonal vector set by row, and there is a one-to-one mapping relationship between a column vector of the first sub-unitary matrix and a candidate resource, of the reference signal, corresponding to the orthogonal vector set.

11. The method according to any one of claims 1 to 10, wherein before receiving the first indication information, the method further comprises:

determining second indication information, wherein the second indication information indicates N orthogonal vectors, there is a mapping relationship between the N orthogonal vectors and a second resource pattern of the reference signal, and N is a positive integer; and
sending the second indication information.

12. The method according to claim 11, wherein the second indication information comprises indexes and/or dimensions of the N orthogonal vectors; or

the second indication information comprises a second moment, and the second moment corresponds to indexes and/or dimensions of the N orthogonal vectors, wherein
the N orthogonal vectors are the same as or different from the M orthogonal vectors.

13. The method according to any one of claims 1 to 12, wherein the method further comprises:
receiving third indication information, wherein the third indication information indicates one or more bandwidth resources, and the one or more bandwidth resources are associated with the first resource pattern.

14. The method according to claim 13, wherein the plurality of bandwidth resources comprise a first bandwidth resource and a second bandwidth resource, and a resource pattern corresponding to the second bandwidth resource is the same as a resource pattern corresponding to the first bandwidth resource, or first indication information corresponding to the second bandwidth resource is the same as first indication information corresponding to the first bandwidth resource, or one or more orthogonal vectors corresponding to the second bandwidth resource are the same as one or more orthogonal vectors corresponding to the first bandwidth resource.

15. The method according to any one of claims 1 to 12, wherein the method further comprises:
sending fourth indication information, wherein the fourth indication information indicates one or more bandwidth resources, and the one or more bandwidth resources are associated with the second resource pattern.

16. The method according to claim 15, wherein the plurality of bandwidth resources comprise a third bandwidth resource and a fourth bandwidth resource, and a resource pattern corresponding to the fourth bandwidth resource is the same as a resource pattern corresponding to the third bandwidth resource, or second indication information corresponding to the fourth bandwidth resource is the same as second indication information corresponding to the third bandwidth resource, or one or more orthogonal vectors corresponding to the fourth bandwidth resource are the same as one or more orthogonal vectors corresponding to the third bandwidth resource.

17. The method according to any one of claims 1 to 16, wherein the first indication information or the second indication information is configured by radio resource control RRC, or is indicated by downlink control information DCI or a media access control control element MAC-CE.

18. The method according to any one of claims 1 to 17, wherein an update period of the first indication information or the second indication information is periodic, aperiodic, or semi-persistent.

19. The method according to any one of claims 1 to 18, wherein the orthogonal vector set comprises an orthogonal vector in a discrete Fourier transform DFT matrix, or a discrete cosine transform DCT matrix, or a Grassmannian Grassmannian manifold.

20. A communication method, comprising:

determining first indication information, wherein the first indication information indicates M orthogonal vectors, there is a mapping relationship between the M orthogonal vectors and a first resource pattern of a reference signal, and M is a positive integer; and
sending the first indication information.

21. The method according to claim 20, wherein the first indication information comprises indexes and/or dimensions of the M orthogonal vectors; or
the first indication information comprises a first moment, and the first moment corresponds to indexes and/or dimensions of the M orthogonal vectors.

22. The method according to claim 20 or 21, wherein the M orthogonal vectors belong to one orthogonal vector set, all orthogonal vectors in the orthogonal vector set correspond to a same candidate resource of the reference signal, the candidate resource comprises resources in one or more domains, and the one or more domains comprises one or more of time domain, frequency domain, and spatial domain.

23. The method according to claim 22, wherein a resource comprised in the first resource pattern of the reference signal belongs to the candidate resource, and there is a mapping relationship between a dimension of each of the M orthogonal vectors and a number of resources in the candidate resource of the reference signal.

24. The method according to claim 23, wherein that there is the mapping relationship between the dimension of each of the M orthogonal vectors and the number of resources in the candidate resource of the reference signal comprises:

if the candidate resource comprises a resource in one domain, the dimension of each of the M orthogonal vectors is a number of resources in the resource in the domain; and
if the candidate resource comprises resources in a plurality of domains, the dimension of each of the M orthogonal vectors is a product of numbers of resources in the resources in the plurality of domains.

25. The method according to any one of claims 22 to 24, wherein that there is the mapping relationship between the M orthogonal vectors and the first resource pattern of the reference signal comprises:

the first resource pattern of the reference signal is a resource pattern formed by candidate resources corresponding to a group of linearly irrelevant row vectors of a first sub-unitary matrix, wherein

the first sub-unitary matrix is formed by arranging the M orthogonal vectors by column, and there is a one-to-one mapping relationship between the row vector of the first sub-unitary matrix and the candidate resource of the reference signal; or

the first resource pattern of the reference signal is a resource pattern formed by candidate resources corresponding to a group of linearly irrelevant column vectors of a first sub-unitary matrix, wherein

the first sub-unitary matrix is formed by arranging the M orthogonal vectors by row, and there is a one-to-one mapping relationship between the column vector of the first sub-unitary matrix and the candidate resource of the reference signal.

26. The method according to claim 20 or 21, wherein the M orthogonal vectors belong to a plurality of orthogonal vector sets, all orthogonal vectors comprised in each orthogonal vector set correspond to a same candidate resource of the reference signal, different orthogonal vector sets correspond to different candidate resources of the reference signal, the plurality of orthogonal vector sets correspond to resources comprised in a combination of different candidate resources of the reference signal, the candidate resource of the reference signal comprises resources in one or more domains, and the one or more domains comprises one or more of time domain, frequency domain, and spatial domain.

27. The method according to claim 26, wherein a resource comprised in the first resource pattern of the reference signal belongs to the resources comprised in the combination of the candidate resources of the reference signal that correspond to the plurality of orthogonal vector sets, and there is a mapping relationship between a dimension of each orthogonal vector in any one of the plurality of orthogonal vector sets and a number of resources in a candidate resource corresponding to the orthogonal vector set.

28. The method according to claim 27, wherein that there is the mapping relationship between the dimension of each orthogonal vector in any one of the plurality of orthogonal vector sets and the number of resources in the candidate resource corresponding to the orthogonal vector set comprises:

if the candidate resource corresponding to the any orthogonal vector set comprises a resource in one domain, the dimension of each orthogonal vector in the orthogonal vector set is a number of resources in the resource in the domain; and

if the candidate resource corresponding to the any orthogonal vector set comprises resources in a plurality of domains, the dimension of each orthogonal vector in the orthogonal vector set is a product of numbers of resources in the resources in the plurality of domains.

29. The method according to any one of claims 26 to 28, wherein that there is the mapping relationship between the M orthogonal vectors and the first resource pattern of the reference signal comprises:

the first resource pattern of the reference signal is a resource pattern formed by candidate resources corresponding to a group of linearly irrelevant row vectors of a second sub-unitary matrix, wherein

there is a one-to-one mapping relationship between the row vector of the second sub-unitary matrix and the resources comprised in the combination of the candidate resources of the reference signal that correspond to the plurality of orthogonal vector sets, and the second sub-unitary matrix is a Kronecker product of a plurality of first sub-unitary matrices; and

a first sub-unitary matrix is formed by arranging an orthogonal vector comprised in one orthogonal vector set by column, and there is a one-to-one mapping relationship between a row vector of the first sub-unitary matrix and a candidate resource, of the reference signal, corresponding to the orthogonal vector set; or

the first resource pattern of the reference signal is a resource pattern formed by candidate resources corresponding to a group of linearly irrelevant column vectors of a second sub-unitary matrix, wherein

there is a one-to-one mapping relationship between the column vectors of the second sub-unitary matrix and the resources comprised in the combination of the candidate resources of the reference signal that correspond to the plurality of orthogonal vector sets, and the second sub-unitary matrix is a Kronecker product of a plurality of first sub-unitary matrices; and

a first sub-unitary matrix is formed by arranging an orthogonal vector comprised in one orthogonal vector set by row, and there is a one-to-one mapping relationship between a column vector of the first sub-unitary matrix and a candidate resource, of the reference signal, corresponding to the orthogonal vector set.

30. The method according to any one of claims 20 to 29, wherein before sending the first indication information, the method further comprises:
receiving second indication information, wherein the second indication information indicates N orthogonal vectors, there is a mapping relationship between the N orthogonal vectors and a second resource pattern of the reference signal, and N is a positive integer; and

31. The method according to claim 30, wherein the second indication information comprises indexes and/or dimensions of the N orthogonal vectors; or

the second indication information comprises a second moment, and the second moment corresponds to indexes and/or dimensions of the N orthogonal vectors, wherein
the N orthogonal vectors are the same as or different from the M orthogonal vectors.

32. The method according to any one of claims 20 to 31, wherein the method further comprises:
sending third indication information, wherein the third indication information indicates one or more bandwidth resources, and the one or more bandwidth resources are associated with the first resource pattern.

33. The method according to claim 32, wherein the plurality of bandwidth resources comprise a first bandwidth resource and a second bandwidth resource, and a resource pattern corresponding to the second bandwidth resource is the same as a resource pattern corresponding to the first bandwidth resource, or first indication information corresponding to the second bandwidth resource is the same as first indication information corresponding to the first bandwidth resource, or one or more orthogonal vectors corresponding to the second bandwidth resource are the same as one or more orthogonal vectors corresponding to the first bandwidth resource.

34. The method according to any one of claims 20 to 31, wherein the method further comprises:
receiving fourth indication information, wherein the fourth indication information indicates one or more bandwidth resources, and the one or more bandwidth resources are associated with the second resource pattern.

35. The method according to claim 34, wherein the plurality of bandwidth resources comprise a third bandwidth resource and a fourth bandwidth resource, and a resource pattern corresponding to the fourth bandwidth resource is the same as a resource pattern corresponding to the third bandwidth resource, or second indication information corresponding to the fourth bandwidth resource is the same as second indication information corresponding to the third bandwidth resource, or one or more orthogonal vectors corresponding to the fourth bandwidth resource are the same as one or more orthogonal vectors corresponding to the third bandwidth resource.

36. The method according to any one of claims 20 to 35, wherein the first indication information or the second indication information is configured by radio resource control RRC, or is indicated by downlink control information DCI or a media access control control element MAC-CE.

37. The method according to any one of claims 20 to 36, wherein an update period of the first indication information or the second indication information is periodic, aperiodic, or semi-persistent.

38. The method according to any one of claims 20 to 37, wherein the one or more orthogonal vectors belong to a plurality of orthogonal vectors in a DFT matrix, or a DCT matrix, or a Grassmannian manifold.

39. A communication apparatus, comprising a communication unit and a processing unit, wherein the communication unit and the processing unit are configured to perform the method according to any one of claims 1 to 19 or claims 20 to 38.

40. A communication apparatus, comprising a processor and a memory, wherein the memory is configured to store instructions, and when the processor executes the instructions, the communication apparatus is enabled to perform the method according to any one of claims 1 to 19 or claims 20 to 38.

41. A communication system, comprising a first apparatus and/or a second apparatus, wherein the first apparatus is configured to perform the method according to any one of claims 1 to 19, and the second apparatus is configured to perform the method according to any one of claims 20 to 38.

42. A computer-readable storage medium, wherein the computer-readable storage medium stores instructions, and when the instructions are run on a computer, the computer is enabled to perform the method according to any one of claims 1 to 19 or claims 20 to 38.

43. A chip system, wherein the chip system comprises a processor and an interface, and the processor is configured to execute a computer program, to enable the chip system to implement the method according to any one of claims 1 to 19 or claims 20 to 38.

44. A computer program product, comprising instructions, wherein when the instructions are run on a computer, the computer is enabled to perform the method according to any one of claims 1 to 19 or claims 20 to 38.

FIG. 1

FIG. 2

First apparatus

Second apparatus

S101: The second apparatus sends first indication information, where the first indication information indicates M orthogonal vectors

S102: The first apparatus determines a first resource pattern of a reference signal based on the first indication information

FIG. 3

Candidate resource of a
reference signal

Matrix P

$$\begin{pmatrix} 1 & 0 & 0 & 0 & 0 & 0 & 0 & 0 & 0 & 0 & 0 & 0 \\ 0 & 0 & 0 & 0 & 0 & 0 & 1 & 0 & 0 & 0 & 0 & 0 \\ 0 & 0 & 0 & 0 & 0 & 0 & 0 & 0 & 0 & 0 & 0 & 1 \end{pmatrix}$$

Mapping
relationship

Port0
Port1    SC0
Port2
Port3

Port0
Port1    SC1
Port2
Port3

Port0
Port1    SC2
Port2
Port3

| Resource included in a first resource pattern of the reference signal | |
|---|---|
| Spatial domain resource (transmit antenna port) | Frequency domain resource |
| Port 0 (port0) | Subcarrier 0 (SC0) |
| Port 2 (port2) | Subcarrier 1 (SC1) |
| Port 3 (port3) | Subcarrier 2 (SC2) |

Resource of the
reference signal

FIG. 4

Matrix P

Candidate resource of a reference signal

Mapping relationship

| Resource included in a first resource pattern of the reference signal | |
|---|---|
| Spatial domain resource (transmit antenna port) | Frequency domain resource |
| Port 0 (port0) | Subcarrier 0 (SC0) |
| Port 2 (port2) | Subcarrier 1 (SC1) |
| Port 3 (port3) | Subcarrier 2 (SC2) |

Resource of the reference signal

FIG. 5

$F_{n*s}$ ⟹
n=3

| SC0 |
| SC1 |
| SC2 |

Has a mapping
relationship with
a frequency
domain resource

$G_{m*l}$ ⟹
m=4

| Port0 |
| Port1 |
| Port2 |
| Port3 |

Has a mapping
relationship with
a spatial domain
resource

$$X = F_{n*s} \otimes G_{m*l} = \begin{bmatrix} F_{11}G & \cdots & F_{1s}G \\ \vdots & \ddots & \vdots \\ F_{n1}G & \cdots & F_{ns}G \end{bmatrix}$$

⟹ Resource
mapping

Port0 ⎱
Port1 ⎱ SC0
Port2 ⎰
Port3 ⎰

Port0 ⎱
Port1 ⎱ SC1
Port2 ⎰
Port3 ⎰

Port0 ⎱
Port1 ⎱ SC2
Port2 ⎰
Port3 ⎰

FIG. 6

FIG. 7

| First apparatus | Second apparatus |

S301: The first apparatus determines N orthogonal vectors

S302: The first apparatus sends second indication information, where the second indication information indicates the N orthogonal vectors

S303: The second apparatus determines M orthogonal vectors

S304: The second apparatus determines a first resource pattern of a CSI-RS based on the M orthogonal vectors

S305: The second apparatus sends first indication information, where the first indication information indicates the M orthogonal vectors

S306: The first apparatus determines the first resource pattern of the CSI-RS based on the first indication information

S307: The second apparatus sends the CSI-RS based on the first resource pattern of the CSI-RS

S308: The first apparatus performs channel estimation based on the CSI-RS

FIG. 8a

```
┌─────────────────────┐                          ┌─────────────────────┐
│   First apparatus   │                          │  Second apparatus   │
└─────────────────────┘                          └─────────────────────┘
           │                                                 │
┌──────────────────────────┐                                 │
│ S401: The first apparatus│                                 │
│ determines N orthogonal  │                                 │
│        vectors           │                                 │
└──────────────────────────┘                                 │
           │                                                 │
           │  S402: The first apparatus sends second         │
           │  indication information, where the second       │
           │  indication information indicates the N         │
           │  orthogonal vectors                             │
           │ ──────────────────────────────────────────────▶│
           │                            ┌────────────────────────────────┐
           │                            │ S403: The second apparatus     │
           │                            │ determines a first resource    │
           │                            │ pattern of a CSI-RS based on   │
           │                            │ the second indication          │
           │                            │ information                    │
           │                            └────────────────────────────────┘
┌──────────────────────────┐                                 │
│ S404: The first apparatus│                                 │
│ determines the first     │                                 │
│ resource pattern of the  │                                 │
│ CSI-RS based on the N    │                                 │
│ orthogonal vectors       │                                 │
└──────────────────────────┘                                 │
           │  S405: The second apparatus sends the CSI-RS    │
           │  based on the first resource pattern of the     │
           │  CSI-RS                                         │
           │ ◀──────────────────────────────────────────────│
┌──────────────────────────┐                                 │
│ S406: The first apparatus│                                 │
│ performs channel         │                                 │
│ estimation based on the  │                                 │
│ CSI-RS                   │                                 │
└──────────────────────────┘                                 │
           │                                                 │
```

FIG. 8b

| First apparatus | | Second apparatus |
|---|---|---|

S501: The first apparatus determines N orthogonal vectors

S502: The first apparatus sends second indication information, where the second indication information indicates the N orthogonal vectors

S503: The second apparatus determines M orthogonal vectors

Implementation 1

S504a: If the M orthogonal vectors are the same as the N orthogonal vectors, the second apparatus does not need to send first indication information

S505a: If the first apparatus does not receive the first indication information, the first apparatus determines a first resource pattern of a CSI-RS based on the second indication information

TO
FIG. 8c-2

TO
FIG. 8c-2

FIG. 8c-1

CONT.
FROM
FIG. 8c-1

CONT.
FROM
FIG. 8c-1

Implementation 2

S504b: If the M orthogonal vectors are different from the N orthogonal vectors, the second apparatus sends first indication information, where the first indication information indicates the M orthogonal vectors

S505b: If the first apparatus receives the first indication information, the first apparatus determines a first resource pattern of a CSI-RS based on the first indication information

S506: The second apparatus sends the CSI-RS based on the first resource pattern of the CSI-RS

S507: The first apparatus performs channel estimation based on the CSI-RS

FIG. 8c-2

| First apparatus | | Second apparatus |
|---|---|---|

S601: The second apparatus determines M orthogonal vectors

S602: The second apparatus determines a first resource pattern of an SRS based on the M orthogonal vectors

S603: The second apparatus sends first indication information, where the first indication information indicates the M orthogonal vectors

S604: The first apparatus determines the first resource pattern of the SRS based on the first indication information

S605: The first apparatus sends the SRS based on the first resource pattern of the SRS

S606: The second apparatus performs channel estimation based on the SRS

FIG. 9

First apparatus

Second apparatus

S701: The second apparatus determines M orthogonal vectors

S702: The second apparatus determines a first resource pattern of a DMRS based on the M orthogonal vectors

S703: The second apparatus sends first indication information, where the first indication information indicates the M orthogonal vectors

S704: The first apparatus determines the first resource pattern of the DMRS based on the first indication information

S705: The second apparatus sends the DMRS based on the first resource pattern of the DMRS

S706: The first apparatus performs channel estimation based on the DMRS

FIG. 10

Frequency domain

Bandwidth resource 1

Bandwidth resource 2

Correspond to a same resource pattern

Time domain

FIG. 11

FIG. 12

FIG. 13

FIG. 14

## INTERNATIONAL SEARCH REPORT

| | International application No. |
|---|---|
| | **PCT/CN2023/113418** |

**A. CLASSIFICATION OF SUBJECT MATTER**

H04W72/04(2023.01)i; H04L5/00(2006.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXTC, VEN, 3GPP, IEEE, CNKI: 向量, 矩阵, 矢量, 序列, 正交, 参考信号, 图样, 图案, 位置, 分布, 映射, 指示, 开销, 频域, 时域, 空域, 索引, 维度, Vector, Matrix, Sequence, RS, SRS, DMRS, pattern, location, distribution, map+, indicat +, overhead, Frequency Domain, Time Domain, Spatial Domain, Index, Dimension

**C. DOCUMENTS CONSIDERED TO BE RELEVANT**

| Category* | Citation of document, with indication, where appropriate, of the relevant passages | Relevant to claim No. |
|---|---|---|
| X | WO 2023130889 A1 (HUAWEI TECHNOLOGIES CO., LTD.) 13 July 2023 (2023-07-13) description, paragraphs [0093]-[0129] | 1-5, 7-9, 11-24, 26-28, 30-44 |
| A | CN 103391621 A (ZTE CORP.) 13 November 2013 (2013-11-13) entire document | 1-44 |
| A | WO 2018082244 A1 (ZTE CORP.) 11 May 2018 (2018-05-11) entire document | 1-44 |
| A | CN 112003808 A (CHENGDU HUAWEI TECHNOLOGIES CO., LTD.) 27 November 2020 (2020-11-27) entire document | 1-44 |
| A | WO 2017020680 A1 (CHINA ACADEMY OF TELECOMMUNICATIONS TECHNOLOGY) 09 February 2017 (2017-02-09) entire document | 1-44 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **17 December 2023** | **21 December 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/113418**

| Patent document cited in search report | | | Publication date (day/month/year) | Patent family member(s) | | | Publication date (day/month/year) |
|---|---|---|---|---|---|---|---|
| WO | 2023130889 | A1 | 13 July 2023 | CN | 116456466 | A | 18 July 2023 |
| CN | 103391621 | A | 13 November 2013 | CN | 103391621 | B | 01 January 2019 |
| WO | 2018082244 | A1 | 11 May 2018 | CN | 108024342 | A | 11 May 2018 |
| CN | 112003808 | A | 27 November 2020 | CN | 112003808 | B | 28 December 2021 |
| | | | | WO | 2020238573 | A1 | 03 December 2020 |
| WO | 2017020680 | A1 | 09 February 2017 | CN | 106452697 | A | 22 February 2017 |
| | | | | CN | 106452697 | B | 16 August 2019 |

Form PCT/ISA/210 (patent family annex) (July 2022)